(19) Europäisches Patentamt
European Patent Office
Office européen des brevets

(11) EP 3 046 279 A1

(12) EUROPEAN PATENT APPLICATION
published in accordance with Art. 153(4) EPC

(43) Date of publication:
20.07.2016 Bulletin 2016/29

(51) Int Cl.:
H04J 3/06 (2006.01)    H04W 56/00 (2009.01)

(21) Application number: 13894339.4

(86) International application number:
PCT/CN2013/084722

(22) Date of filing: 30.09.2013

(87) International publication number:
WO 2015/042955 (02.04.2015 Gazette 2015/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• YU, Zhiqin
Shenzhen
Guangdong 518129 (CN)
• ZHANG, Weiliang
Shenzhen
Guangdong 518129 (CN)

(74) Representative: Thun, Clemens
Mitscherlich PartmbB
Patent- und Rechtsanwälte
Sonnenstraße 33
80331 München (DE)

(54) **SYNCHRONIZATION METHOD AND APPARATUS**

(57) Embodiments of the present invention provide a synchronization method and apparatus, relate to the communications field, and can support synchronization without network coverage between a DS-UE and a network-side device. The method includes: acquiting, by the DS-UE, a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and adjusting, by the DS-UE according to the first timing offset, the start time point of receiving data by the DS-UE or the start time point of sending data by the DS-UE, so as to synchronize with the DM-UE and the network-side device.

A DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device — S101

According to the first timing offset, the DS-UE adjusts the start time point of receiving data by the DS-UE or the start time point of sending data by the DS-UE, so as to synchronize with the DM-UE and the network-side device — S102

FIG. 1

EP 3 046 279 A1

**Description**

**TECHNICAL FIELD**

The present invention relates to the communications field, and in particular, to a synchronization method and apparatus.

**BACKGROUND**

To expand network coverage, one manner is to expand indoor network coverage by adding a site, which, however, requires a huge investment from an operator; another manner is to communicate in a device-to-device (Device to Device, D2D) manner, namely, one is a master user terminal (User Equipment, UE), and the other is a slave UE, thereby reducing network construction costs of the operator while providing network coverage enhancement.

In an indoor or secluded indoor place, when signal strength of a network is in a state that makes communication impossible, some indoor applications are unable to communicate normally. For example, an application of a smart meter requires a watt-hour meter in a basement to report data to an electric power company periodically over the network. Therefore, network coverage needs to be expanded.

However, without network coverage, an existing technology of synchronization between the UE and a network-side device is unable to support a slave UE in completing synchronization with the network-side device.

**SUMMARY**

Embodiments of the present invention provide a synchronization method and apparatus, which can support synchronization without network coverage between a device-to-device slave user terminal (D2D Slave UE, DS-UE) and a network-side device.

To achieve the foregoing objective, the following technical solutions are used in the embodiments of the present invention:

According to a first aspect, an embodiment of the present invention provides a synchronization method, including:

acquiring, by a device-to-device slave user terminal DS-UE, a first timing offset, where the first timing offset is a difference between a start time point of receiving data by the DS-UE and a start time point of sending data by a device-to-device master user terminal DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and

adjusting, by the DS-UE according to the first timing offset, the start time point of receiving data by the DS-UE or the start time point of sending data by the DS-UE, so as to synchronize with the DM-UE and the network-side device.

In a first possible implementation manner of the first aspect, the acquiring, by a device-to-device slave user terminal DS-UE, a first timing offset includes:

receiving, by the DS-UE, a first synchronization signal from the DM-UE when communication is performed between the DS-UE and the DM-UE in a device-to-device D2D manner, where the first synchronization signal is used to synchronize the start time point of receiving data by the DS-UE with the start time point of sending data by the DM-UE; and

acquiring, by the DS-UE, the first timing offset according to the first synchronization signal.

In a second possible implementation manner of the first aspect, before the acquiring, by a device-to-device slave user terminal DS-UE, a first timing offset, the method further includes:

sending, by the DS-UE, a second synchronization signal to the DM-UE when communication is performed between the DS-UE and the DM-UE in a D2D manner, so that the DM-UE acquires the first timing offset according to the second synchronization signal and sends the first timing offset to the DS-UE, where the second synchronization signal is used to synchronize the start time point of sending data by the DS-UE with the start time point of receiving data by the DM-UE.

With reference to the first possible implementation manner of the first aspect, in a third possible implementation manner, a method used by the DS-UE to acquire the first timing offset according to the first synchronization signal includes:

performing, by the DS-UE, calculation on the first synchronization signal to obtain a first synchronization peak; and determining, by the DS-UE, the first timing offset according to a time point corresponding to the first synchronization peak.

With reference to the first possible implementation manner or the third possible implementation manner of the first aspect, in a fourth possible implementation manner, the receiving, by the DS-UE, a first synchronization signal from the DM-UE includes:

receiving, by the DS-UE, the first synchronization signal from the DM-UE on a preset uplink time-frequency resource.

With reference to the second possible implementation manner of the first aspect, in a fifth possible implementation manner, the acquiring, by a device-to-device slave user terminal DS-UE, a first timing offset includes:

receiving, by the DS-UE, the first timing offset from the DM-UE on a preset uplink time-frequency resource.

In a sixth possible implementation manner of the first aspect, after the synchronizing, by the DS-UE, with the network-side device and the DM-UE, the method further includes:

receiving, by the DS-UE, a first instruction message from the DM-UE, where the first instruction message is sent by the network-side device to the DM-UE, the first instruction message is used to instruct that an idle discontinuous reception idle DRX period be changed, and the first instruction message includes a message type and a period value of the idle DRX period;
changing, by the DS-UE, the idle DRX period according to the first instruction message; and
sending, by the DS-UE, a first response message corresponding to the first instruction message to the DM-UE, so that the DM-UE sends the first response message to the network-side device, and the network-side device learns, according to the first response message, success in changing the idle DRX period.

With reference to the sixth possible implementation manner of the first aspect, in a seventh possible implementation manner, after the changing, by the DS-UE, the idle DRX period according to the first instruction message, the method further includes:

communicating, by the DS-UE, with the DM-UE according to a changed idle DRX period.

According to a second aspect, an embodiment of the present invention further provides a synchronization method, including:

sending, by a DM-UE, a first synchronization signal to a DS-UE when communication is performed between the DS-UE and the DM-UE in a D2D manner, where the first synchronization signal is used by the DS-UE to acquire a first timing offset according to the first synchronization signal, the first timing offset is a difference between a start time point of receiving data by the DS-UE and a start time point of sending data by the DM-UE, and the start time point of sending data by the DM-UE is a start time point of sending data after the DM-UE is synchronized with a network-side device; and
keeping, by the DM-UE, synchronization with the DS-UE, where the synchronization is specifically that the DS-UE adjusts, according to the first timing offset, the start time point of receiving data by the DS-UE, so as to synchronize with the DM-UE and the network-side device.

In a first possible implementation manner of the second aspect, the sending, by a DM-UE, a first synchronization signal to a DS-UE includes:

sending, by the DM-UE, the first synchronization signal to the DS-UE on a preset uplink time-frequency resource.

With reference to the second aspect or the first possible implementation manner of the second aspect, in a second possible implementation manner, after the synchronizing, by the DM-UE, with the network-side device and the DS-UE, the method further includes:

sending, by the DM-UE, a first instruction message to the DS-UE, so that the DS-UE changes an idle DRX period according to the first instruction message, where the first instruction message is sent by the network-side device to the DM-UE, the first instruction message is used to instruct that the idle DRX period be changed, and the first instruction message includes a message type and a period value of the idle DRX period;

receiving, by the DM-UE, a first response message that is from the DS-UE and corresponding to the first instruction message; and

sending, by the DM-UE, the first response message to the network-side device, so that the network-side device learns, according to the first response message, success in changing the idle DRX period.

According to a third aspect, an embodiment of the present invention further provides a synchronization method, including:

receiving, by a DM-UE, a synchronization signal from a DS-UE when communication is performed between the DS-UE and the DM-UE in a D2D manner;

acquiring, by the DM-UE, a first timing offset according to the synchronization signal received from the DS-UE, where the first timing offset is a difference between a start time point of sending data by the DS-UE and a start time point of receiving data by the DM-UE, and the start time point of receiving data by the DM-UE is a start time point of receiving data after the DM-UE is synchronized with a network-side device; and

sending, by the DM-UE, the first timing offset to the DS-UE, where the first timing offset is used by the DS-UE to adjust, according to the first timing offset, the start time point of sending data by the DS-UE, so as to synchronize with the DM-UE and the network-side device.

In a first possible implementation manner of the third aspect, a method used by the DM-UE to acquire the first timing offset according to the synchronization signal received from the DS-UE includes:

performing, by the DM-UE, calculation on the synchronization signal received from the DS-UE, so as to obtain a second synchronization peak; and

determining, by the DM-UE, the first timing offset according to a time point corresponding to the second synchronization peak.

With reference to the third aspect or the first possible implementation manner of the third aspect, in a second possible implementation manner, the sending, by the DM-UE, the first timing offset to the DS-UE includes:

sending, by the DM-UE, the first timing offset to the DS-UE on a preset uplink time-frequency resource.

With reference to the third aspect or either the first possible implementation manner or the second possible implementation manner of the third aspect, in a third possible implementation manner, after the synchronizing, by the DM-UE, with the network-side device and the DS-UE, the method further includes:

sending, by the DM-UE, a first instruction message to the DS-UE, so that the DS-UE changes an idle DRX period according to the first instruction message, where the first instruction message is sent by the network-side device to the DM-UE, the first instruction message is used to instruct that the idle DRX period be changed, and the first instruction message includes a message type and a period value of the idle DRX period;

receiving, by the DM-UE, a first response message that is from the DS-UE and corresponding to the first instruction message; and

sending, by the DM-UE, the first response message to the network-side device, so that the network-side device learns, according to the first response message, success in changing the idle DRX period.

According to a fourth aspect, an embodiment of the present invention provides a UE, including:

an acquiring unit, configured to acquire a first timing offset, where the first timing offset is a difference between a start time point of receiving data by the UE and a start time point of sending data by a DM-UE, or is a difference between a start time point of sending data by the UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and

a processing unit, configured to: according to the first timing offset acquired by the acquiring unit, adjust the start time point of receiving data by the UE or the start time point of sending data by the UE, so as to synchronize with the DM-UE and the network-side device.

In a first possible implementation manner of the fourth aspect, the UE further includes a receiving unit; the receiving unit is configured to receive a first synchronization signal from the DM-UE when communication is performed between the UE and the DM-UE in a D2D manner, where the first synchronization signal is used to synchronize the start time point of receiving data by the UE with the start time point of sending data by the DM-UE; and the acquiring unit is specifically configured to acquire the first timing offset according to the first synchronization signal received by the receiving unit, where the first synchronization signal is used to synchronize the start time point of receiving data by the UE with the start time point of sending data by the DM-UE.

In a second possible implementation manner of the fourth aspect, the UE further includes a sending unit, and the sending unit is configured to, before the acquiring unit acquires the first timing offset, send a synchronization signal to the DM-UE when communication is performed between the UE and the DM-UE in a D2D manner, so that the DM-UE acquires the first timing offset according to the second synchronization signal and sends the first timing offset to the UE, where the second synchronization signal is used to synchronize the start time point of sending data by the UE with the start time point of receiving data by the DM-UE.

With reference to the first possible implementation manner of the fourth aspect, in a third possible implementation manner, the acquiring unit is specifically configured to perform calculation on the first synchronization signal received by the receiving unit, so as to obtain a first synchronization peak; and determine the first timing offset according to a time point corresponding to the first synchronization peak.

With reference to the first possible implementation manner or the third possible implementation manner of the fourth aspect, in a fourth possible implementation manner, the receiving unit is specifically configured to receive the first synchronization signal from the DM-UE on a preset uplink time-frequency resource.

With reference to the second possible implementation manner of the fourth aspect, in a fifth possible implementation manner, the acquiring unit is specifically configured to receive the first timing offset from the DM-UE on a preset uplink time-frequency resource.

In a sixth possible implementation manner of the fourth aspect, the UE further includes a sending unit and a receiving unit; the receiving unit is configured to receive a first instruction message from the DM-UE after the UE is synchronized with the network-side device and the DM-UE, where the first instruction message is sent by the network-side device to the DM-UE, the first instruction message is used to instruct that an idle DRX period be changed, and the first instruction message includes a message type and a period value of the idle DRX period; the processing unit is further configured to change the idle DRX period according to the first instruction message received by the receiving unit; and the sending unit is configured to send a first response message, which is corresponding to the first instruction message received by the receiving unit, to the DM-UE, so that the DM-UE sends the first response message to the network-side device, and the network-side device learns, according to the first response message, success in changing the idle DRX period.

With reference to the sixth possible implementation manner of the fourth aspect, in a seventh possible implementation manner, the processing unit is further configured to communicate with the DM-UE according to a changed idle DRX period.

According to a fifth aspect, an embodiment of the present invention further provides a UE, including:

a sending unit, configured to send a first synchronization signal to a DS-UE when communication is performed between the DS-UE and the UE in a D2D manner, where the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is a start time point of sending data after the UE is synchronized with a network-side device; and

a keeping unit, configured to keep synchronization with the DS-UE, where the synchronization is specifically that the DS-UE adjusts, according to the first timing offset, the start time point of receiving data by the DS-UE, so as to synchronize with the UE and the network-side device.

In a first possible implementation manner of the fifth aspect, the sending unit is specifically configured to send the first synchronization signal to the DS-UE on a preset uplink time-frequency resource.

With reference to the fifth aspect or the first possible implementation manner of the fifth aspect, in a second possible implementation manner, the UE further includes a receiving unit;
the sending unit is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period;
the receiving unit is configured to receive a first response message that is from the DS-UE and corresponding to the first instruction message sent by the sending unit; and
the sending unit is further configured to send the first response message, which is received by the receiving unit, to the network-side device, so that the network-side device learns, according to the first response message, success in changing the idle DRX period.

According to a sixth aspect, an embodiment of the present invention further provides a UE, including:

a receiving unit, configured to receive a synchronization signal from a DS-UE when communication is performed between the DS-UE and the UE in a D2D manner;
an acquiring unit, configured to acquire a first timing offset according to the synchronization signal received by the receiving unit from the DS-UE, where the first timing offset is a difference between a start time point of sending data by the DS-UE and a start time point of receiving data by the UE, and the start time point of receiving data by the UE is a start time point of receiving data after the UE is synchronized with a network-side device; and
a sending unit, configured to send the first timing offset, which is acquired by the acquiring unit, to the DS-UE, where the first timing offset is used by the DS-UE to adjust, according to the first timing offset, the start time point of sending data by the DS-UE, so as to synchronize with the UE and the network-side device.

In a first possible implementation manner of the sixth aspect,
the acquiring unit is specifically configured to perform calculation on the synchronization signal received by the receiving unit from the DS-UE, so as to obtain a second synchronization peak; and determine the first timing offset according to a time point corresponding to the second synchronization peak.

With reference to the sixth aspect or the first possible implementation manner of the sixth aspect, in a second possible implementation manner,
the sending unit is specifically configured to send the first timing offset, which is acquired by the acquiring unit, to the DS-UE on a preset uplink time-frequency resource.

With reference to the sixth aspect or either the first possible implementation manner or the second possible implementation manner of the sixth aspect, in a third possible implementation manner,
the sending unit is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period;
the receiving unit is further configured to receive a first response message that is from the DS-UE and corresponding to the first instruction message sent by the sending unit; and
the sending unit is further configured to send the first response message, which is received by the receiving unit, to the network-side device, so that the network-side device learns, according to the first response message, success in changing the idle DRX period.

According to a seventh aspect, an embodiment of the present invention further provides a UE, including:

a processor, configured to acquire a first timing offset, and adjust, according to the first timing offset, a start time point of receiving data by the UE or a start time point of sending data by the UE, so as to synchronize with a DM-UE and a network-side device, where the first timing offset is a difference between a start time point of receiving data by the UE and a start time point of sending data by the DM-UE, or is a difference between a start time point of sending data by the UE and a start time point of receiving data by a DM-UE, the start time point of sending data by the DM-UE is a start time point of sending data after the DM-UE is synchronized with the network-side device, and the start time point of receiving data by the DM-UE is a start time point of receiving data after the DM-UE is synchronized with the network-side device.

In a first possible implementation manner of the seventh aspect, the UE further includes a receiver;
the receiver is configured to receive a first synchronization signal from the DM-UE when communication is performed between the UE and the DM-UE in a D2D manner, where the first synchronization signal is used to synchronize the start time point of receiving data by the UE with the start time point of sending data by the DM-UE; and
the processor is specifically configured to acquire the first timing offset according to the first synchronization signal received by the receiver.

In a second possible implementation manner of the seventh aspect, the UE further includes a sender, and the sender is configured to, before the processor acquires the first timing offset, send a second synchronization signal to the DM-UE when communication is performed between the UE and the DM-UE in a D2D manner, so that the DM-UE acquires the first timing offset according to the second synchronization signal and sends the first timing offset to the UE, where the second synchronization signal is used to synchronize the start time point of sending data by the UE with the start time point of receiving data by the DM-UE.

With reference to the first possible implementation manner of the seventh aspect, in a third possible implementation manner,
the processor is specifically configured to perform calculation on the first synchronization signal received by the receiver, so as to obtain a first synchronization peak; and determine the first timing offset according to a time point corresponding to the first synchronization peak.

With reference to the first possible implementation manner or the third possible implementation manner of the seventh aspect, in a fourth possible implementation manner,
the receiver is specifically configured to receive the first synchronization signal from the DM-UE on a preset uplink time-frequency resource.

With reference to the second possible implementation manner of the seventh aspect, in a fifth possible implementation manner, the UE further includes a receiver, and
the receiver is configured to receive the first timing offset from the DM-UE on a preset uplink time-frequency resource.

In a sixth possible implementation manner of the seventh aspect, the UE further includes a sender and a receiver;
the receiver is configured to receive a first instruction message from the DM-UE after the UE is synchronized with the network-side device and the DM-UE, where the first instruction message is sent by the network-side device to the DM-UE, the first instruction message is used to instruct that an idle DRX period be changed, and the first instruction message includes a message type and a period value of the idle DRX period;
the processor is further configured to change the idle DRX period according to the first instruction message received by the receiver; and
the sender is configured to send a first response message, which is corresponding to the first instruction message received by the receiver, to the DM-UE, so that the DM-UE sends the first response message to the network-side device, and the network-side device learns, according to the first response message, success in changing the idle DRX period.

With reference to the sixth possible implementation manner of the seventh aspect, in a seventh possible implementation manner,
the processor is further configured to communicate with the DM-UE according to a changed idle DRX period.

According to an eighth aspect, an embodiment of the present invention further provides a UE, including:

a sender, configured to send a first synchronization signal to a DS-UE when communication is performed between the DS-UE and the UE in a D2D manner, where the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is a start time point of sending data after the UE is synchronized with a network-side device; and
a processor, configured to keep synchronization with the DS-UE, where the synchronization is specifically that the DS-UE adjusts, according to the first timing offset, the start time point of receiving data by the DS-UE, so as to synchronize with the UE and the network-side device.

In a first possible implementation manner of the eighth aspect,
the sender is specifically configured to send the first synchronization signal to the DS-UE on a preset uplink time-frequency resource.

With reference to the eighth aspect or the first possible implementation manner of the eighth aspect, in a second possible implementation manner, the UE further includes a receiver;
the sender is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period;
the receiver is configured to receive a first response message that is from the DS-UE and corresponding to the first instruction message sent by the sender; and

the sender is further configured to send the first response message, which is received by the receiver, to the network-side device, so that the network-side device learns, according to the first response message, success in changing the idle DRX period.

According to a ninth aspect, an embodiment of the present invention further provides a UE, including:

a receiver, configured to receive a synchronization signal from a DS-UE when communication is performed between the DS-UE and the UE in a D2D manner;

a processor, configured to acquire a first timing offset according to the synchronization signal received by the receiver from the DS-UE, where the first timing offset is a difference between a start time point of sending data by the DS-UE and a start time point of receiving data by the UE, and the start time point of receiving data by the UE is a start time point of receiving data after the UE is synchronized with a network-side device; and

a sender, configured to send the first timing offset, which is acquired by the processor, to the DS-UE, where the first timing offset is used by the DS-UE to adjust, according to the first timing offset, the start time point of sending data by the DS-UE, so as to synchronize with the UE and the network-side device.

In a first possible implementation manner of the ninth aspect,

the processor is specifically configured to perform calculation on the synchronization signal received by the receiver from the DS-UE, so as to obtain a second synchronization peak; and determine the first timing offset according to a time point corresponding to the second synchronization peak.

With reference to the ninth aspect or the first possible implementation manner of the ninth aspect, in a second possible implementation manner,

the sender is specifically configured to send the first timing offset, which is acquired by the processor, to the DS-UE on a preset uplink time-frequency resource.

With reference to the ninth aspect or either the first possible implementation manner or the second possible implementation manner of the ninth aspect, in a third possible implementation manner,

the sender is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period;

the receiver is further configured to receive a first response message that is from the DS-UE and corresponding to the first instruction message sent by the sender; and

the sender is further configured to send the first response message, which is received by the receiver, to the network-side device, so that the network-side device learns, according to the first response message, success in changing the idle DRX period.

According to the synchronization method and apparatus provided in the embodiments of the present invention, a DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and according to the first timing offset, and the DS-UE adjusts the start time point of receiving data by the DS-UE or the start time point of sending data by the DS-UE, so as to synchronize with the DM-UE and the network-side device. By means of this solution, after the DM-UE is synchronized with the network-side device, because the DS-UE can get synchronized with the network-side device by synchronizing with the DM-UE, synchronization without network coverage can be supported between the DS-UE and the network-side device.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention.

FIG. 1 is a flowchart of a synchronization method according to an embodiment of the present invention;
FIG. 2 is a flowchart of a synchronization method according to an embodiment of the present invention;
FIG. 3 is a flowchart of a synchronization method according to an embodiment of the present invention;
FIG. 4 is an interaction diagram of a synchronization method according to an embodiment of the present invention;

FIG. 5 is a schematic diagram of a time difference between a start time point of receiving data by a DS-UE and a start-up time point of the DS-UE according to an embodiment of the present invention;
FIG. 6 is a schematic diagram of an early or late start-up time point of a UE according to an embodiment of the present invention;
FIG. 7 is an interaction diagram of a synchronization method according to an embodiment of the present invention;
FIG. 8 is a schematic diagram of a time difference between a start-up time point of a DM-UE and a start time point of receiving data by the DM-UE according to an embodiment of the present invention;
FIG. 9 is an interaction diagram of a synchronization method according to an embodiment of the present invention;
FIG. 10 is a schematic structural diagram of a UE according to an embodiment of the present invention;
FIG. 11 is a schematic structural diagram of a UE according to an embodiment of the present invention;
FIG. 12 is a schematic structural diagram of a UE according to an embodiment of the present invention;
FIG. 13 is a schematic structural diagram of a UE according to an embodiment of the present invention;
FIG. 14 is a schematic structural diagram of a UE according to an embodiment of the present invention;
FIG. 15 is a schematic structural diagram of a UE according to an embodiment of the present invention;
FIG. 16 is a schematic structural diagram of a UE according to an embodiment of the present invention;
FIG. 17 is a schematic structural diagram of a UE according to an embodiment of the present invention;
FIG. 18 is a schematic structural diagram of a UE according to an embodiment of the present invention; and
FIG. 19 is a block diagram of a communications system according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

Various technologies described in this specification may be applied to various wireless communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier Frequency Division Multiple Access (SC-FDMA, Single Carrier Frequency Division Multiple Addressing) system, a general packet radio service (GPRS, General Packet Radio Service) system, a Long Term Evolution (LTE, Long Term Evolution) system, and other communications systems of this type.

A device-to-device master user terminal (D2D Master UE, DM-UE) and a DS-UE are two user terminals that communicate in a D2D manner, where the DM-UE is a UE in coverage of a network-side device, and the DS-UE is a UE outside the coverage of the network-side device. In a normal communication process, to reduce power consumption, the network-side device configures idle (idle) DRX (Discontinuous Reception, discontinuous reception) for the DM-UE and the DS-UE separately, and therefore, after shifting to a normal operation stage, the DM-UE and the DS-UE are in the idle DRX state in most time. That is, the DM-UE and the DS-UE wake up once at a specified interval according to a configured idle DRX period.

The following describes a wake-up period of the DM-UE and the DS-UE by using an example in which the idle DRX period configured by the network-side device for the DM-UE and the DS-UE is 10 minutes.

The DM-UE and the DS-UE each have two clock crystal oscillators, one is a first clock crystal oscillator, and the other is a second clock crystal oscillator; and the second clock crystal oscillator is relatively more stable and consumes more power (higher stability of a clock crystal oscillator indicates higher accuracy of the clock crystal oscillator). Therefore, to reduce power consumption, the second clock crystal oscillator may be generally turned off during sleep time of the DM-UE and the DS-UE, that is, only the first clock crystal oscillator works. In this way, because the first clock crystal oscillator of the DM-UE and the first clock crystal oscillator of the DS-UE are less stable, that is, the first clock crystal oscillator of the DM-UE and the first clock crystal oscillator of the DS-UE are less accurate, the wake-up period of the DM-UE and the wake-up period of the DS-UE have changed in contrast with a wake-up period configured by the network-side device. For example, the wake-up period of the DM-UE is 10.4 minutes, and the wake-up period of the DS-UE is 9.8 minutes. Consequently, after the DM-UE and the DS-UE wake up according to the wake-up period, a start time point of sending data by the DM-UE and a start time point of sending data by the DS-UE are earlier or later than a start time point of receiving data by the network-side device, or a start time point of receiving data by the DM-UE and a start time point of receiving data by the DS-UE are earlier or later than a start time point of sending data by the network-side device.

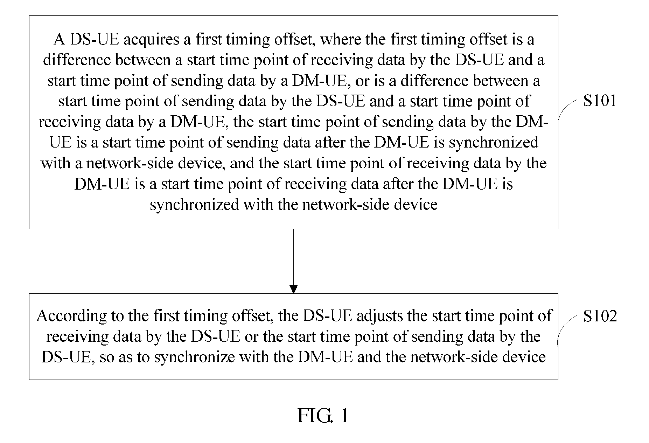

An embodiment of the present invention provides a synchronization method, and relates to a DS-UE side. As shown in FIG. 1, the method may include:

S101. A DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device.

In the embodiment of the present invention, both the DM-UE and the DS-UE are user terminals, the DM-UE is a UE in coverage of the network-side device, and the DS-UE is a UE outside the coverage of the network-side device.

Optionally, an ID (IDentity, serial number) of the DM-UE and an ID of the DS-UE may be set in chips of the DM-UE and the DS-UE, respectively, and the ID of the DM-UE is correlated with the ID of the DS-UE, so that the DM-UE can synchronize or communicate only with the DS-UE correlated with the DM-UE; correspondingly, the DS-UE can synchronize or communicate only with the DM-UE correlated with the DS-UE.

The network-side device provided in the embodiment of the present invention may include a device such as a base station. The DM-UE and the DS-UE may include a terminal such as a smart meter.

For example, due to a difference of an internal clock crystal oscillator between the DM-UE and the DS-UE, after the DM-UE and the DS-UE wake up according to an idle DRX period configured by the network-side device, the start time point of sending data by the DM-UE and the start time point of sending data by the DS-UE may be earlier or later than a start time point of receiving data by the network-side device, or the start time point of receiving data by the DM-UE and the start time point of receiving data by the DS-UE may be earlier or later than a start time point of sending data by the network-side device. If the DM-UE and the DS-UE need to communicate with the network-side device, the DM-UE and the DS-UE need to synchronize with the network-side device first. After the DM-UE is synchronized with the network-side device, the DS-UE needs to adjust, according to a timing offset between the DS-UE and the network-side device when communication is performed between the DS-UE and the DM-UE in a D2D manner, the start time point of sending data by the DS-UE and the start time point of receiving data by the DS-UE. The DS-UE is a UE outside coverage of the network-side device, and therefore, an embodiment of the present invention provides a synchronization method, in which the DS-UE implements synchronization with the network-side device by synchronizing with the DM-UE that has been synchronized with the network-side device.

Specifically, the DS-UE acquires the first timing offset, where the first timing offset is a difference between the start time point of receiving data by the DS-UE and the start time point of sending data by the DM-UE, or is a difference between the start time point of sending data by the DS-UE and the start time point of receiving data by a DM-UE, the start time point of sending data by the DM-UE is a start time point of sending data after the DM-UE is synchronized with the network-side device, and the start time point of receiving data by the DM-UE is a start time point of receiving data after the DM-UE is synchronized with the network-side device.

It should be noted that because the DM-UE is in the coverage of the network-side device, the DM-UE may be synchronized with the network-side device by using an existing synchronization technology, which may specifically include:

(1) The DM-UE needs to be synchronized with the network-side device after waking up according to the configured idle DRX period.

(2) The DM-UE searches for a synchronization signal that is sent by the network-side device and used to synchronize the start time point of sending data by the network-side device with the start time point of receiving data by the DM-UE; according to the synchronization signal used to synchronize the start time point of sending data by the network-side device with the start time point of receiving data by the DM-UE, acquires a timing offset between the network-side device and the DM-UE; and according to the timing offset between the network-side device and the DM-UE, adjusts the start time point of receiving data by the DM-UE, so as to synchronize with the network-side device.

Specifically, the DM-UE may acquire a peak of the synchronization signal according to the synchronization signal that is sent by the network-side device and used to synchronize the start time point of sending data by the network-side device with the start time point of receiving data by the DM-UE, and according to the peak of the synchronization signal, obtain the timing offset between the network-side device and the DM-UE. Therefore, according to the timing offset between the network-side device and the DM-UE, the DM-UE adjusts the start time point of receiving data by the DM-UE, so as to complete downlink synchronization with the network-side device.

A process of uplink synchronization between the DM-UE and the network-side device is similar to a process of downlink synchronization between the DM-UE and the network-side device, and will be described in detail in a subsequent embodiment.

S102. According to the first timing offset, the DS-UE adjusts the start time point of receiving data by the DS-UE or the start time point of sending data by the DS-UE, so as to synchronize with the DM-UE and the network-side device.

After the DS-UE acquires the first timing offset, the DS-UE may adjust, according to the first timing offset, the start time point of receiving data by the DS-UE or the start time point of sending data by the DS-UE, so as to synchronize with the DM-UE and the network-side device. Before the DS-UE acquires the first timing offset, the DM-UE has completed synchronization with the network-side device, and therefore, after the DS-UE adjusts, according to the first timing offset, the start time point of receiving data by the DS-UE or the start time point of sending data by the DS-UE, the DS-UE completes synchronization with the DM-UE, so that the DS-UE completes synchronization with the network-side device.

Specifically, if the first timing offset acquired by the DS-UE is a difference between the start time point of sending data by the DM-UE and the start time point of receiving data by the DS-UE, the DS-UE may adjust, according to the first timing offset, the start time point of receiving data by the DS-UE, that is, downlink synchronization is completed between the DS-UE and the DM-UE; correspondingly, if the first timing offset acquired by the DS-UE is a difference between the start time point of sending data by the DS-UE and the start time point of receiving data by the DM-UE, the DS-UE may adjust, according to the first timing offset, the start time point of sending data by the DS-UE, that is, uplink synchronization is completed between the DS-UE and the DM-UE. A specific process of completing downlink synchronization or uplink synchronization by the DS-UE will be described in detail in a subsequent embodiment.

It should be noted that because the DM-UE is generally close to the DS-UE, a delay of transmitting data between the DM-UE and the DS-UE is ignorable. That is, when downlink synchronization is completed between the DS-UE and the DM-UE, it may be deemed that uplink synchronization is also completed between the DS-UE and the DM-UE; correspondingly, when uplink synchronization is completed between the DS-UE and the DM-UE, it may be deemed that downlink synchronization is also completed between the DS-UE and the DM-UE.

By now, synchronization has been completed between the DS-UE, the DM-UE, and the network-side device.

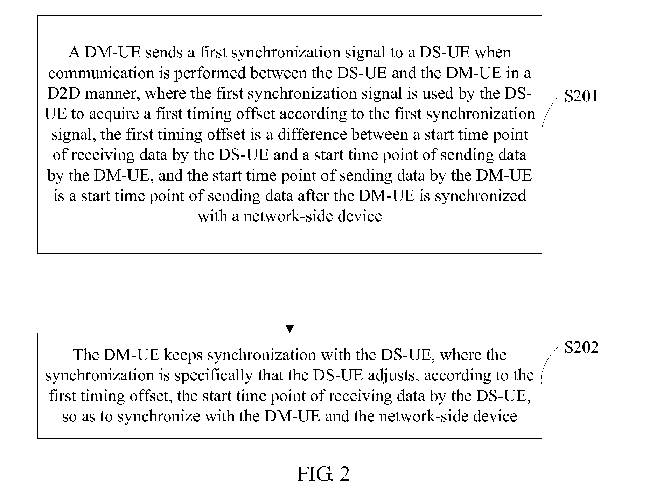

An embodiment of the present invention further provides a synchronization method, and relates to a DM-UE side. As shown in FIG. 2, the method may include:

S201. A DM-UE sends a first synchronization signal to a DS-UE when communication is performed between the DS-UE and the DM-UE in a D2D manner, where the first synchronization signal is used by the DS-UE to acquire a first timing offset according to the first synchronization signal, the first timing offset is a difference between a start time point of receiving data by the DS-UE and a start time point of sending data by the DM-UE, and the start time point of sending data by the DM-UE is a start time point of sending data after the DM-UE is synchronized with a network-side device.

Due to a difference of an internal clock crystal oscillator between the DM-UE and the DS-UE, after the DM-UE and the DS-UE wake up according to an idle DRX period configured by the network-side device, the start time point of sending data by the DM-UE and the start time point of sending data by the DS-UE may be earlier or later than a start time point of receiving data by the network-side device, or the start time point of receiving data by the DM-UE and the start time point of receiving data by the DS-UE may be earlier or later than a start time point of sending data by the network-side device. If the DM-UE and the DS-UE need to communicate with the network-side device, the DM-UE and the DS-UE need to synchronize with the network-side device first. After the DM-UE is synchronized with the network-side device, the DM-UE sends the first synchronization signal to the DS-UE when communication is performed between the DS-UE and the DM-UE in the D2D manner, where the first synchronization signal may be used by the DS-UE to acquire the first timing offset according to the first synchronization signal, the first timing offset is a difference between the start time point of receiving data by the DS-UE and the start time point of sending data by the DM-UE, and the start time point of sending data by the DM-UE is the start time point of sending data after the DM-UE is synchronized with the network-side device.

S202. The DM-UE keeps synchronization with the DS-UE, where the synchronization is specifically that the DS-UE adjusts, according to the first timing offset, the start time point of receiving data by the DS-UE, so as to synchronize with the DM-UE and the network-side device.

After the DM-UE sends the first synchronization signal to the DS-UE, the DS-UE may acquire the first timing offset according to the first synchronization signal, and adjust, according to the first timing offset, the start time point of receiving data by the DS-UE, so as to synchronize with the DM-UE and the network-side device.

Optionally, the first synchronization signal may be generated by the DM-UE according to a last bit or another specified bit of an ID of the DM-UE, which is not limited in the present invention. For example, the ID of the DM-UE has 8 bits in total, which are A0A1A2A3A4A5A6A7. The A7 bit may be selected to generate the first synchronization signal, or the A5 bit may be selected to generate the first synchronization signal.

In the embodiment of the present invention, before the DS-UE completes synchronization with the DM-UE, the DM-UE has completed synchronization with the network-side device. Therefore, after the DS-UE completes synchronization with the DM-UE, the DS-UE also completes synchronization with the network-side device.

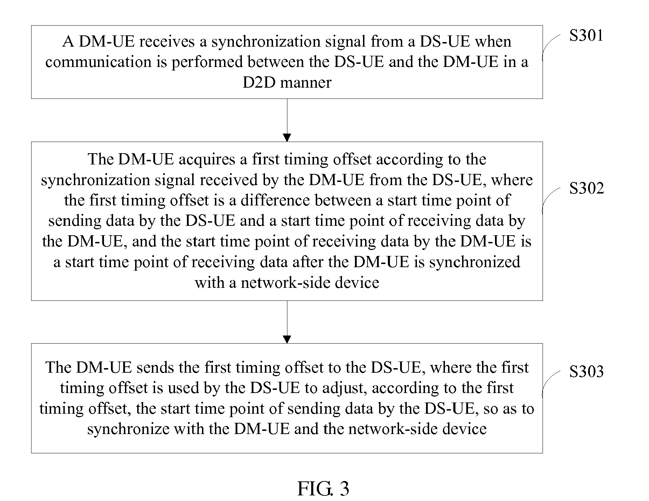

An embodiment of the present invention further provides a synchronization method, and relates to a DM-UE side. As shown in FIG. 3, the method may include:

S301. A DM-UE receives a synchronization signal from a DS-UE when communication is performed between the DS-UE and the DM-UE in a D2D manner.

Due to a difference of an internal clock crystal oscillator between the DM-UE and the DS-UE, after the DM-UE and the DS-UE wake up according to an idle DRX period configured by a network-side device, a start time point of sending data by the DM-UE and a start time point of sending data by the DS-UE may be earlier or later than a start time point of receiving data by the network-side device, or a start time point of receiving data by the DM-UE and a start time point of receiving data by the DS-UE may be earlier or later than a start time point of sending data by the network-side device. If the DM-UE and the DS-UE need to communicate with the network-side device, the DM-UE and the DS-UE need to synchronize with the network-side device first. After the DM-UE is synchronized with the network-side device, when communication is performed between the DS-UE and the DM-UE in the D2D manner, the DM-UE receives a synchronization signal from the DS-UE. At this time, the DS-UE has not synchronized with the network-side device yet.

Optionally, the synchronization signal received by the DM-UE from the DS-UE may be generated by the DS-UE according to a last bit or another specified bit of an ID of the DS-UE, which is not limited in the present invention. For example, the ID of the DS-UE has 8 bits in total, which are B0B1B2B3B4B5B6B7. The B7 bit may be selected to generate the synchronization signal received by the DM-UE from the DS-UE, or the B5 bit may be selected to generate the synchronization signal received by the DM-UE from the DS-UE.

S302. The DM-UE acquires a first timing offset according to the synchronization signal received by the DM-UE from the DS-UE, where the first timing offset is a difference between a start time point of sending data by the DS-UE and a start time point of receiving data by the DM-UE, and the start time point of receiving data by the DM-UE is a start time point of receiving data after the DM-UE is synchronized with a network-side device.

After the DM-UE receives the synchronization signal sent by the DS-UE, the DM-UE may acquire the first timing offset according to the synchronization signal received by the DM-UE from the DS-UE, where the first timing offset is a difference between the start time point of sending data by the DS-UE and the start time point of receiving data by the DM-UE, and the start time point of receiving data by the DM-UE is the start time point of receiving data after the DM-UE is synchronized with the network-side device.

S303. The DM-UE sends the first timing offset to the DS-UE, where the first timing offset is used by the DS-UE to adjust, according to the first timing offset, the start time point of sending data by the DS-UE, so as to synchronize with the DM-UE and the network-side device.

After the DM-UE acquires the first timing offset, the DM-UE may send the first timing offset to the DS-UE, where the first timing offset may be used by the DS-UE to adjust, according to the first timing offset, the start time point of sending data by the DS-UE, so as to complete synchronization with the DM-UE and the network-side device.

In the embodiment of the present invention, before the DS-UE completes synchronization with the DM-UE, the DM-UE has completed synchronization with the network-side device. Therefore, after the DS-UE completes synchronization with the DM-UE, the DS-UE also completes synchronization with the network-side device.

According to the synchronization method provided in the embodiment of the present invention, a DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and the DS-UE adjusts, according to the first timing offset, the start time point of receiving data by the DS-UE or the start time point of sending data by the DS-UE, so as to synchronize with the DM-UE and the network-side device. By means of this solution, after the DM-UE is synchronized with the network-side device, because the DS-UE can get synchronized with the network-side device by synchronizing with the DM-UE, synchronization without network coverage can be supported between the DS-UE and the network-side device.

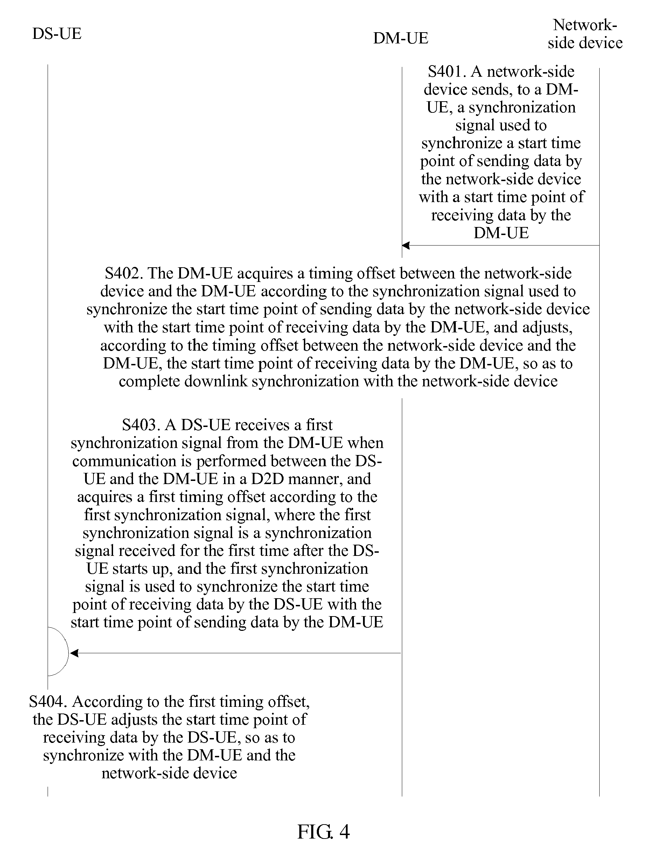

An embodiment of the present invention further provides a synchronization method. As shown in FIG. 4, the method may include:

S401. A network-side device sends, to a DM-UE, a synchronization signal used to synchronize a start time point of sending data by the network-side device with a start time point of receiving data by the DM-UE.

In the embodiment of the present invention, both the DM-UE and the DS-UE are user terminals, the DM-UE is a UE in coverage of the network-side device, and the DS-UE is a UE outside the coverage of the network-side device.

Optionally, an ID of the DM-UE and an ID of the DS-UE may be set in chips of the DM-UE and the DS-UE, respectively, and the ID of the DM-UE is correlated with the ID of the DS-UE, so that the DM-UE can synchronize or communicate only with the DS-UE correlated with the DM-UE; correspondingly, the DS-UE can synchronize or communicate only with the DM-UE correlated with the DS-UE.

The network-side device provided in the embodiment of the present invention may include a device such as a base station. The DM-UE and the DS-UE may include a terminal such as a smart meter.

In a normal communication process, after the DM-UE wakes up according to an idle DRX period configured for the DM-UE by the network-side device, if the DM-UE needs to communicate with the network-side device, the DM-UE first searches for a synchronization signal that is sent by the network-side device and used to synchronize the start time point of sending data by the network-side device with a start time point of receiving data by the DM-UE; and performs synchronization with the network-side device according to the synchronization signal.

It should be noted that: when the network-side device communicates with the DM-UE, the DM-UE first acquires a difference according to the synchronization signal, where the difference is a difference between the start time point of receiving data by the DM-UE and the start time point of sending data by the network-side device, namely, a timing offset between the DM-UE and the network-side device, and the synchronization signal is sent by the network-side device and used to synchronize the start time point of sending data by the network-side device with the start time point of receiving data by the DM-UE; therefore, according to the timing offset, the DM-UE adjusts the start time point of receiving data by the DM-UE, so as to synchronize with the start time point of sending data by the network-side device.

Further, a delay of transmitting data between the network-side device and the DM-UE is already counted when the DM-UE adjusts the start time point of receiving data by the DM-UE.

Optionally, the idle DRX period may be configured for the UE by the network-side device, or may be set by a manufacturer before delivery of the UE, where the UE may include the DM-UE and the DS-UE.

S402. The DM-UE acquires a timing offset between the network-side device and the DM-UE according to the synchronization signal used to synchronize the start time point of sending data by the network-side device with the start time point of receiving data by the DM-UE, and adjusts, according to the timing offset between the network-side device and the DM-UE, the start time point of receiving data by the DM-UE, so as to complete downlink synchronization with the network-side device.

After the DM-UE receives the synchronization signal that is from the network-side device and used to synchronize the start time point of sending data by the network-side device with the start time point of receiving data by the DM-UE, the DM-UE may acquire a peak of the synchronization signal according to the synchronization signal, and obtain the timing offset between the network-side device and the DM-UE according to the peak of the synchronization signal. Therefore, according to the timing offset between the network-side device and the DM-UE, the DM-UE adjusts the start time point of receiving data by the DM-UE, so as to perform downlink synchronization with the network-side device.

A process of uplink synchronization between the DM-UE and the network-side device is similar to a process of downlink synchronization between the DM-UE and the network-side device, and may specifically include the following:

The DM-UE sends an access signal to the network-side device; after the network-side device receives the access signal, the network-side device obtains, by means of calculation according to the access signal, a difference between the start time point of receiving data by the network-side device and timing of an internal clock crystal oscillator of the network-side device, and sends the difference to the DM-UE, so that the DM-UE can adjust, according to the difference, the start time point of sending data by the DM-UE, to synchronize with the start time point of receiving data by the network-side device, thereby completing uplink synchronization between the DM-UE and the network-side device. For example, the network-side device determines, by means of calculation and according to the access signal sent by the DM-UE, that the difference between the start time point of sending data by the DM-UE and the start time point of receiving data by the network-side device is 5 milliseconds. After the network-side device sends the time difference of 5 milliseconds to the DM-UE, when sending data to the network-side device, the DM-UE may adjust the start time point of sending data by the DM-UE 5 milliseconds earlier, that is, the DM-UE sends the data to the network-side device 5 milliseconds earlier.

It should be noted that because the DM-UE is in the coverage of the network-side device, the DM-UE may be synchronized with the network-side device by using an existing synchronization technology, which is not repeated herein.

S403. A DS-UE receives a first synchronization signal from the DM-UE when communication is performed between the DS-UE and the DM-UE in a D2D manner, and acquires a first timing offset according to the first synchronization signal, where the first synchronization signal is a synchronization signal received for the first time after the DS-UE starts up, where the first synchronization signal is used to synchronize the start time point of receiving data by the DS-UE with the start time point of sending data by the DM-UE.

Optionally, the first synchronization signal may be generated by the DM-UE according to a last bit or another specified bit of an ID of the DM-UE, which is not limited in the present invention. For example, the ID of the DM-UE has 8 bits in total, which are A0A1A2A3A4A5A6A7. The A7 bit may be selected to generate the first synchronization signal, or the A5 bit may be selected to generate the first synchronization signal.

Specifically, a method used by the DS-UE to acquire the first timing offset according to the first synchronization signal may include:

a. The DS-UE performs calculation on the first synchronization signal to obtain a first synchronization peak.

For example, the calculation is specifically as follows: Assuming that the first synchronization signal received by the DS-UE is (A0+j*B0), (A1+j*B1), (A2+j*B2), and (A3+j*B3), locally stored synchronization sequences (C0-j*D0), (C1-j*D1), and (C2-j*D2) are used to perform calculation on the first synchronization signal. Specifically, after the calculation on the first synchronization signal is performed, the sequences are:

$$X0=(A0+j*B0)*(C0-j*D0)+(A1+j*B1)*(C1-j*D1)+(A2+j*B2)*(C2-j*D2);$$

and

$$X1=(A1+j*B1)*(C0-j*D0)+(A2+j*B2)*(C1-j*D1)+(A3+j*B3)*(C2-j*D2).$$

A value with a greater amplitude in the X0 sequence and the X1 sequence is used as a first synchronization peak.
b. The DS-UE determines the first timing offset according to a time point corresponding to the first synchronization peak.

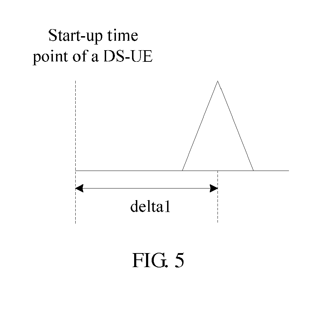

As shown in FIG. 5, FIG. 5 is a schematic diagram of calculating a difference delta1 between the start time point of receiving data by the DS-UE and a start-up time point of the DS-UE. It can be seen that the difference between the start time point of receiving data by the DS-UE and the start-up time point of the DS-UE may be a time difference between the start time point of sending data by the DM-UE and the start time point of receiving data by the DS-UE. The start time point of receiving data by the DS-UE may be represented by the time point corresponding to the first synchronization peak obtained by performing calculation on the first synchronization signal after the DS-UE receives the first synchronization signal.

A person of ordinary skill in the art may understand that in a communication process, data is transmitted by using a frame as a unit. Using a 10-millisecond frame as an example, if each frame includes 10 subframes, which may be subframe 0, subframe 1, subframe 2, ..., and subframe 9, each subframe is 1 millisecond.

Optionally, because a clock crystal oscillator error of the DS-UE may cause the start-up time point of the DS-UE to be earlier or later than the time point of the network-side device, the DM-UE may send the first synchronization signal to the DS-UE for at least two times in order to reduce power consumption and complete synchronization between the DS-UE and the DM-UE and the network-side device more accurately and better.

It should be noted that because the clock crystal oscillator error of the DS-UE may cause the start-up time point of the DS-UE to be earlier or later than the time point of the network-side device, and the first synchronization signal is sent by the DM-UE to the DS-UE, the DM-UE may send the first synchronization signal to the DS-UE for at least two times. This is because if the DM-UE sends the first synchronization signal only once and the time point of sending the first synchronization signal by the DM-UE is earlier than the start-up time point of the DS-UE, the DS-UE is unable to receive the first synchronization signal.

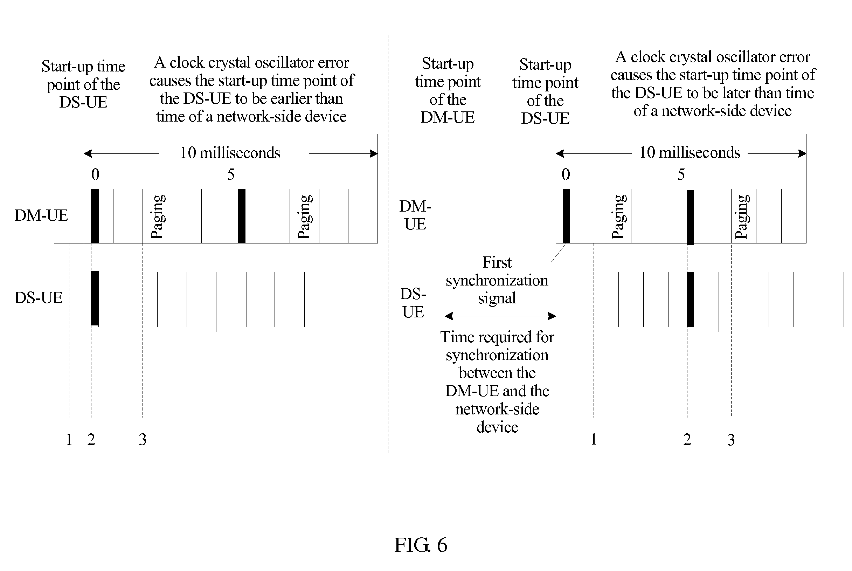

For example, as shown in FIG. 6, FIG. 6 is a schematic diagram in which the clock crystal oscillator error causes the start-up time point of the DS-UE to be earlier than the time point of the network-side device and causes the start-up time point of the DS-UE to be later than the time point of the network-side device, separately, where the start-up time point of the DS-UE is the start-up time point of the DS-UE that is set by the network-side device according to the time point of the network-side device, and the start-up time point of the DM-UE is the start-up time point of the DM-UE that is set by the network-side device according to the time point of the network-side device; 1 is an actual start-up time point of the DS-UE; 2 is a time point of synchronization between the DS-UE and the DM-UE; and 3 is a time point of receiving paging by the DS-UE. If the clock crystal oscillator error causes the start-up time point of the DS-UE to be earlier than the time point of the network-side device, the DS-UE may receive, after start-up, the first synchronization signal sent by the DM-UE in the subframe 0; if the clock crystal oscillator error causes the start-up time point of the DS-UE to be later than the time point of the network-side device, the DS-UE may receive, after start-up, the first synchronization signal sent by the DM-UE in the subframe 5.

Optionally, the DM-UE may send the first synchronization signal to the DS-UE in the subframe 0 and the subframe 5 separately, or may send the first synchronization signal to the DS-UE in the subframe 1 and the subframe 6 separately, or may send the first synchronization signal to the DS-UE in another subframe that meets design requirements, which is not limited in the present invention.

For example, assuming that the DM-UE sends the first synchronization signal to the DS-UE in the subframe 0 and the subframe 5 separately, if the first synchronization signal received for the first time after start-up of the DS-UE is the first synchronization signal in the subframe 0, an offset between the start-up time point of the DS-UE and the time point corresponding to the first synchronization peak obtained by the DS-UE is delta2=0 millisecond; if the first synchronization signal received for the first time after start-up of the DS-UE is the first synchronization signal in the subframe 5, an offset between the start-up time point of the DS-UE and the time point corresponding to the first synchronization peak obtained by the DS-UE is delta2=5 milliseconds.

Further, the DS-UE adds delta1 and delta2 obtained above to determine the first timing offset delta.

It should be noted that: because the DM-UE sends the first synchronization signal in the subframe 0 and the subframe 5 of each frame separately, if the DS-UE receives, in the subframe 0, the first synchronization signal sent by the DM-UE, the first synchronization signal includes subframe information of the subframe 0; correspondingly, if the DS-UE receives, in the subframe 5, the first synchronization signal sent by the DM-UE, the first synchronization signal includes subframe information of the subframe 5.

Optionally, the DS-UE may receive the first synchronization signal from the DM-UE on a preset uplink time-frequency resource. That is, on the uplink time-frequency resource of the DM-UE, a dedicated time domain resource and a dedicated frequency domain resource may be allocated to the DM-UE and the DS-UE, so as to send and receive the first synchronization signal.

S404. According to the first timing offset, the DS-UE adjusts the start time point of receiving data by the DS-UE, so as to synchronize with the DM-UE and the network-side device.

After the DS-UE acquires the first timing offset, the DS-UE may adjust, according to the first timing offset, the start time point of receiving data by the DS-UE to be the same as the start time point of sending data by the DM-UE, so as to complete downlink synchronization with the DM-UE. Because downlink synchronization between the DM-UE and the network-side device has already been completed, that is, the start time point of receiving data by the DM-UE is synchronized with the start time point of sending data by the network-side device, the DS-UE also completes downlink synchronization with the network-side device when the DS-UE completes downlink synchronization with the DM-UE.

It should be noted that because the DM-UE is generally close to the DS-UE, a delay of transmitting data between the DM-UE and the DS-UE is ignorable. That is, when the DS-UE completes downlink synchronization with the DM-UE, it may be deemed that the DS-UE also completes uplink synchronization with the DM-UE.

For example, assuming that the first timing offset acquired by the DS-UE is 5 milliseconds, namely, the DS-UE learns that the difference between the start time point of receiving data by the DS-UE and the start time point of sending data by the DM-UE is 5 milliseconds, the DS-UE may adjust, according to the difference, the start time point of receiving data by the DS-UE 5 milliseconds earlier, so that the DS-UE completes synchronization with the DM-UE.

Optionally, due to an error caused by a first clock crystal oscillator, when the DS-UE is in each wake-up period, an unfixed offset exists between the start time point of receiving data by the DS-UE and the start time point of sending data by the DM-UE synchronized with the network-side device. Therefore, according to the acquired first timing offset, the DS-UE may adjust the start time point of receiving data by the DS-UE, so as to complete synchronization with the DM-UE and the network-side device.

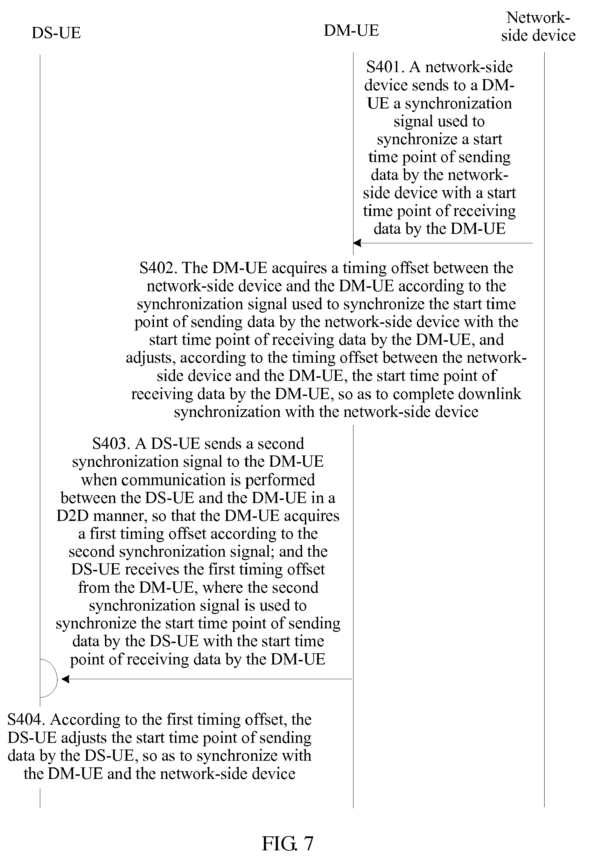

An embodiment of the present invention further provides a synchronization method. As shown in FIG. 7, the synchronization method provided in this embodiment differs from the synchronization method provided in the foregoing embodiment in S403 and S404.

Specifically, in the synchronization method provided in this embodiment, S403 and S404 may be:

S403. The DS-UE sends a second synchronization signal to the DM-UE when communication is performed between the DS-UE and the DM-UE in a D2D manner, so that the DM-UE acquires a first timing offset according to the second synchronization signal; and the DS-UE receives the first timing offset from the DM-UE, where the second synchronization signal is used to synchronize the start time point of sending data by the DS-UE with the start time point of receiving data by the DM-UE.

Optionally, the second synchronization signal may be generated by the DS-UE according to a last bit or another specified bit of an ID of the DS-UE, which is not limited in the present invention. For example, the ID of the DS-UE has 8 bits in total, which are B0B1B2B3B4B5B6B7. The B7 bit may be selected to generate the second synchronization signal, or the B5 bit may be selected to generate the second synchronization signal.

Because a clock crystal oscillator error of the DS-UE may cause the start-up time point of the DS-UE to be earlier or later than the time point of the network-side device, the DS-UE may send the second synchronization signal to the DM-UE at least once in order to reduce power consumption and complete synchronization between the DS-UE and the DM-UE and the network-side device more accurately and better.

It should be noted that because the clock crystal oscillator error of the DS-UE may cause the start-up time point of the DS-UE to be earlier or later than the time point of the network-side device, and the second synchronization signal is sent by the DS-UE to the DM-UE, the DS-UE may send the second synchronization signal to the DM-UE at least once. That is because no matter whether the start-up time point of the DS-UE is early or late, the DM-UE can receive the second synchronization signal sent by the DS-UE after start-up.

After the DM-UE receives the second synchronization signal sent by the DS-UE, the DM-UE may perform calculation on the second synchronization signal to obtain a second synchronization peak, determine a first timing offset according to a time point corresponding to the second synchronization peak, and send the first timing offset to the DS-UE, so that the DS-UE acquires the first timing offset. Specifically, a method for calculating the second synchronization peak is the same as the method for calculating the first synchronization peak in S403 in the foregoing embodiment, and is not repeated herein.

Optionally, the DS-UE may receive the first timing offset from the DM-UE on a preset uplink time-frequency resource. That is, on the uplink time-frequency resource of the DM-UE, a dedicated time domain resource and a dedicated frequency domain resource may be allocated to the DM-UE and the DS-UE for sending and receiving the first timing offset.

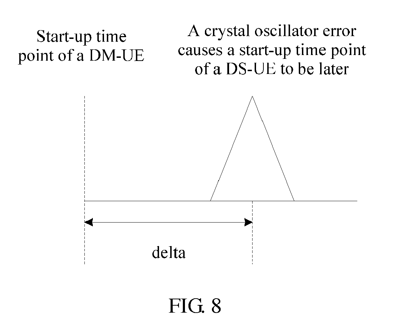

FIG. 8 is a schematic diagram of calculating a first timing offset delta. It can be seen that the first timing offset is a time difference between the start-up time point of the DM-UE and the start time point of receiving data by the DM-UE, where the time difference may be a time difference between the start time point of sending data by the DS-UE and the start time point of receiving data by the DM-UE.

Understandably, if a start position of a locally stored synchronization sequence is set to a frame header position of each frame of data, the start time point of receiving data by the DM-UE may be represented by the time point corresponding to the second synchronization peak obtained by performing calculation on the second synchronization signal after the DM-UE receives the second synchronization signal. If the start position of the locally stored synchronization sequence is set to a position in frame middle positions of each frame of data, after the DM-UE receives the second synchronization signal and obtains the time point corresponding to the second synchronization peak by performing calculation on the second synchronization signal, the DM-UE may obtain, by means calculation and according to the time point corresponding to the second synchronization peak, the start time point of receiving data by the DM-UE. For example, the start position of the synchronization sequence is set to the subframe 5 of each frame of data, and therefore, the time point corresponding to the second synchronization peak obtained by the DM-UE is the subframe 5. That is, the DM-UE may subtract a data length of first 4 subframes from the subframe 5, so as to obtain the start time point of receiving data by the DM-UE.

Specially, after receiving the first timing offset sent by the DM-UE, the DS-UE can learn that the DM-UE has been synchronized with the network-side device at this time.

S404. According to the first timing offset, the DS-UE adjusts the start time point of sending data by the DS-UE, so as to synchronize with the DM-UE and the network-side device.

After the DS-UE acquires the first timing offset, the DS-UE may adjust, according to the first timing offset, the start time point of sending data by the DS-UE to be the same as the start time point of receiving data by the DM-UE, so as to complete uplink synchronization with the DM-UE. Because uplink synchronization is already completed between the DM-UE and the network-side device, namely, the start time point of sending data by the DM-UE is synchronized with the start time point of receiving data by the network-side device, the DS-UE also completes uplink synchronization with the network-side device when the DS-UE completes uplink synchronization with the DM-UE.

It should be noted that because the DM-UE is generally close to the DS-UE, a delay of transmitting data between the DM-UE and the DS-UE is ignorable. That is, when the DS-UE completes uplink synchronization with the DM-UE, it may be deemed that the DS-UE also completes downlink synchronization with the DM-UE.

For example, assuming that the first timing offset acquired by the DS-UE is 5 milliseconds, namely, the DS-UE learns that the difference between the start time point of sending data by the DS-UE and the start time point of receiving data by the DM-UE is 5 milliseconds, the DS-UE may adjust, according to the difference, the start time point of sending data by the DS-UE 5 milliseconds earlier, so that the DS-UE completes synchronization with the DM-UE.

Optionally, due to an error caused by a first clock crystal oscillator, when the DS-UE is in each wake-up period, an unfixed offset exists between the start time point of sending data by the DS-UE and the start time point of receiving data by the DM-UE synchronized with the network-side device. Therefore, according to the acquired first timing offset, the DS-UE may adjust the start time point of sending data by the DS-UE, so as to complete synchronization with the DM-UE and the network-side device.

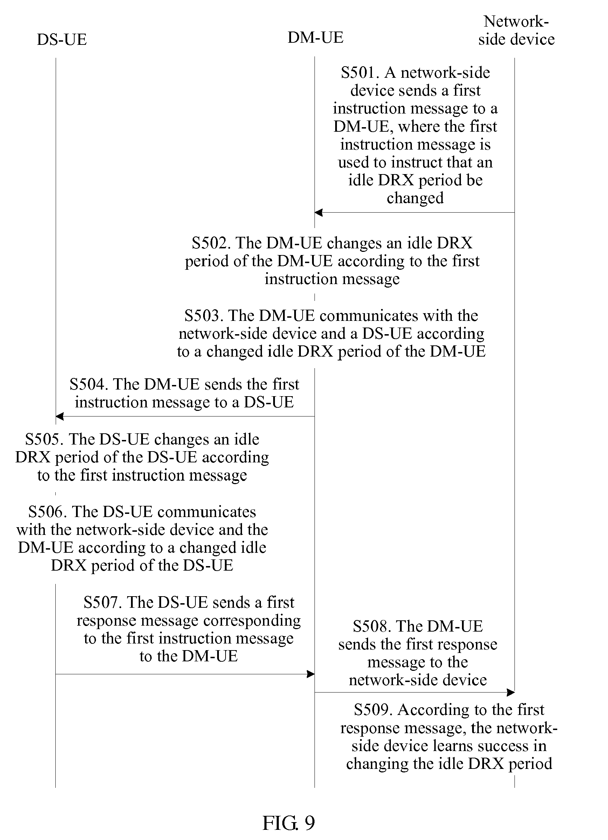

Further, after the DS-UE is synchronized with the DM-UE and the network-side device, the present invention further provides an embodiment. As shown in FIG. 9, this embodiment may include:

S501. A network-side device sends a first instruction message to a DM-UE, where the first instruction message is used to instruct that an idle DRX period be changed.

After the DM-UE is synchronized with the network-side device, if the network-side device needs to change the idle DRX period, the network-side device sends the first instruction message to the DM-UE, where the first instruction message may be used to instruct that the idle DRX period be changed.

Optionally, the first instruction message may include a message type and a period value of the idle DRX period. For example, the message type may be "idle DRX period change of dual UEs", and the period value of the idle DRX period may be any value that meets design requirements, such as 10 seconds, 60 seconds, and 600 seconds.

It should be noted that the present invention only gives an exemplary description by using an example in which the first instruction message is used to instruct that the idle DRX period be changed. The first instruction message may include but not be limited to a message for instructing that the idle DRX period be changed. That is, the first instruction message may be any data or message that meets requirements and is delivered by a network side, on which the present invention imposes no limitation.

S502. The DM-UE changes an idle DRX period of the DM-UE according to the first instruction message.

After the DM-UE receives the first instruction message, the DM-UE may change the idle DRX period of the DM-UE according to the first instruction message.

S503. The DM-UE communicates with the network-side device and a DS-UE according to a changed idle DRX period of the DM-UE.

In a subsequent communication process after the DM-UE changes the idle DRX period of the DM-UE according to the first instruction message sent by the network-side device, the DM-UE communicates with the network-side device and the DS-UE according to the changed idle DRX period of the DM-UE.

S504. The DM-UE sends the first instruction message to the DS-UE.

After the DS-UE completes synchronization with the DM-UE, if the DM-UE receives the first instruction message sent by the network-side device, the DM-UE sends the first instruction message to the DS-UE, so that the DS-UE may also change an idle DRX period of the DS-UE according to the first instruction message.

It should be noted that the present invention does not limit implementation order of S502-S503 and S504. That is, in the present invention, S502-S503 may be performed before S504; or S504 may be performed before S502-S503; or S502-S503 and S504 may be performed simultaneously.

S505. The DS-UE changes an idle DRX period of the DS-UE according to the first instruction message.

After the DS-UE receives the first instruction message sent by the DM-UE, the DS-UE may change the idle DRX period of the DS-UE according to the first instruction message.

For example, the DS-UE receives the first instruction message, where the first instruction message instructs the DS-UE to change the idle DRX period to 60 seconds, and therefore, according to the instruction message, the DS-UE changes the idle DRX period, which is originally configured by the network side for the DS-UE, to 60 seconds.

S506. The DS-UE communicates with the network-side device and the DM-UE according to a changed idle DRX period of the DS-UE.

In a subsequent communication process after the DS-UE changes the idle DRX period of the DS-UE, the DS-UE may communicate with the network-side device and the DM-UE according to the changed idle DRX period of the DS-UE.

S507. The DS-UE sends a first response message corresponding to the first instruction message to the DM-UE.

After the DS-UE completes changing the idle DRX period of the DS-UE, the DS-UE may send the first response message corresponding to the first instruction message to the DM-UE, so that the DM-UE can learn success of the DS-UE in changing the idle DRX period of the DS-UE.

S508. The DM-UE sends the first response message to the network-side device.

After the DM-UE receives the first response message reported by the DS-UE, if the DM-UE completes changing the idle DRX period of the DM-UE, the DM-UE sends the first response message to the network-side device, and therefore, according to the first response message, the network-side device can learn success of the DM-UE and the DS-UE in changing the idle DRX period.

Specially, the first response message sent by the DM-UE to the network-side device may include a state of success of the DM-UE in changing the idle DRX period of the DM-UE.

Optionally, the first response message may be used to indicate success of the DM-UE and the DS-UE in changing the idle DRX period according to the first instruction message; or may be used to indicate success of the DM-UE and the DS-UE in receiving the first instruction message and success of the DM-UE and the DS-UE in changing the idle DRX period according to the first instruction message, on which the present invention imposes no limitation.

S509. According to the first response message, the network-side device learns success of changing the idle DRX period.

After the network-side device receives the first response message sent by the DM-UE, the network-side device may learn, according to the first response message, success in changing the idle DRX period of the DM-UE and success in changing the idle DRX period of the DS-UE.

According to the synchronization method provided in the embodiment of the present invention, a DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and the DS-UE adjusts, according to the first timing offset, the start time point of receiving data by the DS-UE or the start time point of sending data by the DS-UE, so as to synchronize with the DM-UE and the network-side device. By means of this solution, after the DM-UE is synchronized with the network-side device, because the DS-UE can get synchronized with the network-side device by synchronizing with the DM-UE, synchronization without network coverage can be supported between the DS-UE and the network-side device.

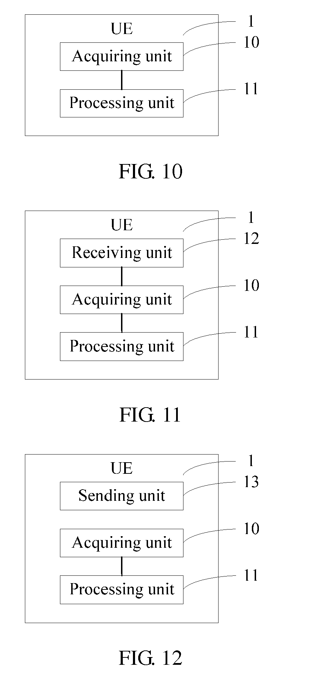

As shown in FIG. 10, an embodiment of the present invention provides a UE 1, where the UE 1 may include:

an acquiring unit 10, configured to acquire a first timing offset, where the first timing offset is a difference between a start time point of receiving data by the UE 1 and a start time point of sending data by a DM-UE, or is a difference between a start time point of sending data by the UE 1 and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and

a processing unit 11, configured to adjust, according to the first timing offset acquired by the acquiring unit 10, the start time point of receiving data by the UE 1 or the start time point of sending data by the UE 1, so as to synchronize with the DM-UE and the network-side device.

Optionally, as shown in FIG. 11, the UE 1 further includes a receiving unit 12, where
the receiving unit 12 is configured to receive a first synchronization signal from the DM-UE when communication is performed between the UE 1 and the DM-UE in a D2D manner, where the first synchronization signal is used to synchronize the start time point of receiving data by the UE 1 with the start time point of sending data by the DM-UE, and the acquiring unit 10 is specifically configured to acquire the first timing offset according to the first synchronization signal received by the receiving unit 12, where the first synchronization signal is used to synthesize the start time point of receiving data by the UE 1 with the start time point of sending data by the DM-UE.

Optionally, as shown in FIG. 12, the UE 1 further includes a sending unit 13, where
the sending unit 13 is configured to, before the acquiring unit 10 acquires the first timing offset, send a synchronization signal to the DM-UE when communication is performed between the UE 1 and the DM-UE in a D2D manner, so that the DM-UE acquires the first timing offset according to the second synchronization signal and sends the first timing offset to the UE 1, where the second synchronization signal is used to synchronize the start time point of sending data by the UE 1 with the start time point of receiving data by the DM-UE.

Optionally, the acquiring unit 10 is specifically configured to perform calculation on the first synchronization signal received by the receiving unit 12, so as to obtain a first synchronization peak; and determine the first timing offset according to a time point corresponding to the first synchronization peak.

Optionally, the receiving unit 12 is specifically configured to receive the first synchronization signal from the DM-UE on a preset uplink time-frequency resource.

Optionally, the acquiring unit 10 is specifically configured to receive the first timing offset from the DM-UE on a preset uplink time-frequency resource.

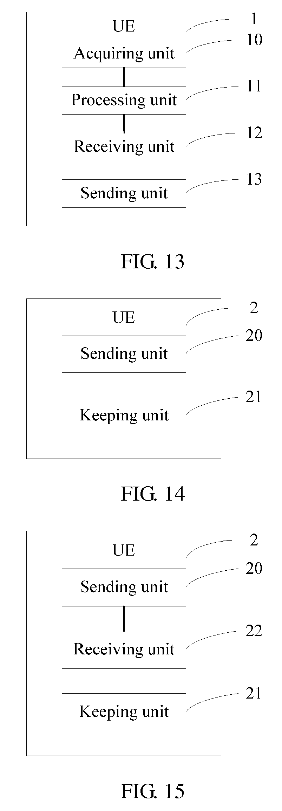

Optionally, as shown in FIG. 13, the UE 1 further includes a sending unit 13 and a receiving unit 12.

The receiving unit 12 is configured to receive a first instruction message from the DM-UE after the UE 1 is synchronized with the network-side device and the DM-UE, where the first instruction message is sent by the network-side device to the DM-UE, the first instruction message is used to instruct that an idle DRX period be changed, and the first instruction message includes a message type and a period value of the idle DRX period; the processing unit 11 is further configured to change the idle DRX period according to the first instruction message received by the receiving unit 12; and the sending unit 13 is configured to send, to the DM-UE, a first response message corresponding to the first instruction message received by the receiving unit 12, so that the DM-UE sends the first response message to the network-side device, and the network-side device learns, according to the first response message, success in changing the idle DRX period.

Optionally, the processing unit 11 is further configured to communicate with the DM-UE according to a changed idle DRX period.

The UE provided in the embodiment of the present invention acquires a first timing offset, where the first timing offset is a difference between a start time point of receiving data by the UE and a start time point of sending data by a DM-UE, or is a difference between a start time point of sending data by the UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and the UE adjusts, according to the first timing offset, the start time point of receiving data by the UE or the start time point of sending data by the UE, so as to synchronize with the DM-UE and the network-side device. By means of this solution, after the DM-UE is synchronized with the network-side device, because the UE can get synchronized with the network-side device by synchronizing with the DM-UE, synchronization without network coverage can be supported between the UE and the network-side device.

As shown in FIG. 14, an embodiment of the present invention further provides a UE 2, where the UE 2 may include:

a sending unit 20, configured to send a first synchronization signal to a DS-UE when communication is performed between the DS-UE and the UE 2 in a D2D manner, where the first synchronization signal is used by the DS-UE to acquire a first timing offset according to the first synchronization signal, the first timing offset is a difference between a start time point of receiving data by the DS-UE and a start time point of sending data by the UE 2, and the start time point of sending data by the UE 2 is a start time point of sending data after the UE 2 is synchronized with a network-side device; and

a keeping unit 21, configured to keep synchronization with the DS-UE, where the synchronization is specifically that the DS-UE adjusts, according to the first timing offset, the start time point of receiving data by the DS-UE, so as to synchronize with the UE 2 and the network-side device.

Optionally, the sending unit 20 is specifically configured to send the first synchronization signal to the DS-UE on a preset uplink time-frequency resource.

Optionally, as shown in FIG. 15, the UE 2 further includes a receiving unit 22, where

the sending unit 20 is further configured to send a first instruction message to the DS-UE after the UE 2 is synchronized with the network-side device and the DS-UE, so that the DS-UE changes an idle DRX period according to the first instruction message, where the first instruction message is sent by the network-side device to the UE 2, the first instruction message is used to instruct that the idle DRX period be changed, and the first instruction message includes a message type and a period value of the idle DRX period; the receiving unit 22 is configured to receive a first response message that is from the DS-UE and corresponding to the first instruction message sent by the sending unit 20; and the sending unit 20 is further configured to send the first response message, which is received by the receiving unit 22, to the network-side device, so that the network-side device learns, according to the first response message, success in changing the idle DRX period.

The UE provided in the embodiment of the present invention may send a first synchronization signal to a DS-UE when communication is performed between the DS-UE and the UE in a D2D manner, where the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is the start time point of sending data after the UE is synchronized with a network-side device; and the UE keeps synchronization with the DS-UE, where the synchronization is specifically that the DS-UE adjusts, according to the first timing offset, the start time point of receiving data by the DS-UE, so as to synchronize with the UE and the network-side device. By means of this solution, after the UE is synchronized with the network-side device, because the DS-UE can get synchronized with the network-side device by synchronizing with the UE, synchronization without network coverage can be supported between the DS-UE and the network-side device.

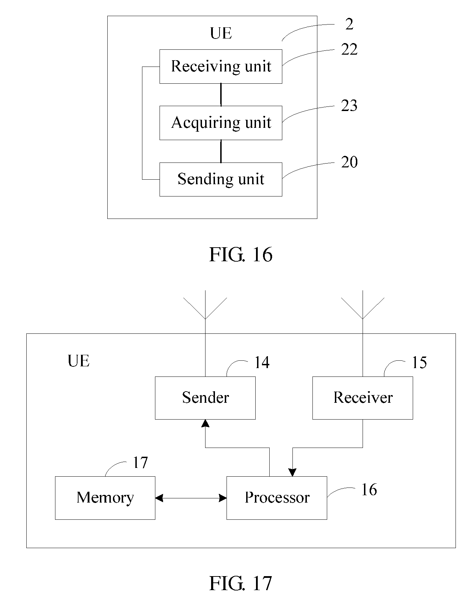

As shown in FIG. 16, an embodiment of the present invention further provides a UE 2, where the UE 2 may include:

a receiving unit 22, configured to receive a synchronization signal from a DS-UE when communication is performed between the DS-UE and the UE 2 in a D2D manner;

an acquiring unit 23, configured to acquire a first timing offset according to the synchronization signal received by the receiving unit 22 from the DS-UE, where the first timing offset is a difference between a start time point of sending data by the DS-UE and a start time point of receiving data by the UE 2, and the start time point of receiving data by the UE 2 is a start time point of receiving data after the UE 2 is synchronized with a network-side device; and

a sending unit 20, configured to send the first timing offset, which is acquired by the acquiring unit 23, to the DS-UE, where the first timing offset is used by the DS-UE to adjust, according to the first timing offset, the start time point of sending data by the DS-UE, so as to synchronize with the UE 2 and the network-side device.

Optionally, the acquiring unit 23 is specifically configured to perform calculation on the synchronization signal received by the receiving unit 22 from the DS-UE, so as to obtain a second synchronization peak; and determine the first timing offset according to a time point corresponding to the second synchronization peak.

Optionally, the sending unit 20 is specifically configured to send the first timing offset, which is acquired by the acquiring unit 23, to the DS-UE on a preset uplink time-frequency resource.

Optionally, the sending unit 20 is further configured to send a first instruction message to the DS-UE after the UE 2 is synchronized with the network-side device and the DS-UE, so that the DS-UE changes an idle DRX period according to the first instruction message, where the first instruction message is sent by the network-side device to the UE 2, the first instruction message is used to instruct that the idle DRX period be changed, and the first instruction message includes a message type and a period value of the idle DRX period; the receiving unit 22 is further configured to receive a first response message that is from the DS-UE and corresponding to the first instruction message sent by the sending unit 20; and the sending unit 20 is further configured to send the first response message, which is received by the receiving unit 22, to the network-side device, so that the network-side device learns, according to the first response message, success in changing the idle DRX period.

The UE provided in the embodiment of the present invention receives a synchronization signal from a DS-UE when communication is performed between the DS-UE and the UE in a D2D manner, and the UE acquires a first timing offset according to the synchronization signal received by the UE from the DS-UE, where the first timing offset is a difference between a start time point of sending data by the DS-UE and a start time point of receiving data by the UE, and the start time point of receiving data by the UE is the start time point of receiving data after the UE is synchronized with a network-side device; and the UE sends the first timing offset to the DS-UE, where the first timing offset is used by the DS-UE to adjust, according to the first timing offset, the start time point of sending data by the DS-UE, so as to synchronize with the UE and the network-side device. By means of this solution, after the UE is synchronized with the network-side device, because the DS-UE can get synchronized with the network-side device by synchronizing with the UE, synchronization without network coverage can be supported between the DS-UE and the network-side device.

As shown in FIG. 17, an embodiment of the present invention provides a UE, including a sender 14, a receiver 15, a processor 16, and a memory 17.

The sender 14 may be configured to send a communication signal to another user terminal, and, specially, if the UE needs to communicate with the another user terminal, the sender 14 may send communication data to the another user terminal.

The receiver 15 may be configured to receive the communication signal from the another user terminal, and specially, if the UE needs to communicate with the another user terminal, the receiver 15 may receive communication data from the another user terminal.

The processor 16 is a control and processing center of the UE, and, by running a software program stored in the memory 17 and invoking and processing the data stored in the memory 17, controls the UE to receive and send a signal and implement other functions of the UE.

The memory 17 may be configured to store a software program and data, so that the processor 16 may implement signal receiving and sending and other functions of the UE by running the software program stored in the memory 17.

Specifically, the processor 16 may be configured to acquire a first timing offset, and adjust, according to the first timing offset, the start time point of receiving data by the UE or the start time point of sending data by the UE, so as to synchronize with a DM-UE and a network-side device, where the first timing offset is a difference between a start time point of receiving data by the UE and a start time point of sending data by the DM-UE, or is a difference between a start time point of sending data by the UE and a start time point of receiving data by the DM-UE, the start time point of sending data by the DM-UE is a start time point of sending data after the DM-UE is synchronized with the network-side device, and the start time point of receiving data by the DM-UE is a start time point of receiving data after the DM-UE is synchronized with the network-side device. The memory 17 may be configured to store the first timing offset and control the UE to execute the software program in the foregoing step, and therefore, by executing the software program, the processor 16 may invoke the first timing offset to complete the foregoing step.

Optionally, the receiver 15 is configured to receive a first synchronization signal from the DM-UE when communication is performed between the UE and the DM-UE in a D2D manner, where the first synchronization signal is used to synchronize the start time point of receiving data by the UE with the start time point of sending data by the DM-UE; and the processor 16 is specifically configured to acquire the first timing offset according to the first synchronization signal received by the receiver 15.

Optionally, the sender 14 is configured to, before the processor 16 acquires the first timing offset, send a second synchronization signal to the DM-UE when communication is performed between the UE and the DM-UE in a D2D manner, so that the DM-UE acquires the first timing offset according to the second synchronization signal and sends the first timing offset to the UE, where the second synchronization signal is used to synchronize the start time point of sending data by the UE with the start time point of receiving data by the DM-UE.

Optionally, the processor 16 is specifically configured to perform calculation on the first synchronization signal received by the receiver 15, so as to obtain a first synchronization peak; and determine the first timing offset according to a time point corresponding to the first synchronization peak.

Optionally, the receiver 15 is specifically configured to receive the first synchronization signal from the DM-UE on a preset uplink time-frequency resource.

Optionally, the receiver 15 is configured to receive the first timing offset from the DM-UE on a preset uplink time-frequency resource.

Optionally, the receiver 15 is configured to receive a first instruction message from the DM-UE after the UE is synchronized with the network-side device and the DM-UE, where the first instruction message is sent by the network-side device to the DM-UE, the first instruction message is used to instruct that an idle DRX period be changed, and the first instruction message includes a message type and a period value of the idle DRX period; the processor 16 is further configured to change the idle DRX period according to the first instruction message received by the receiver 15; and the sender 14 is configured to send a first response message, which is corresponding to the first instruction message received by the receiver 15, to the DM-UE, so that the DM-UE sends the first response message to the network-side device, and the network-side device learns, according to the first response message, success in changing the idle DRX period.

Optionally, the processor 16 is further configured to communicate with the DM-UE according to a changed idle DRX period.

The UE provided in the embodiment of the present invention acquires a first timing offset, where the first timing offset is a difference between a start time point of receiving data by the UE and a start time point of sending data by a DM-UE, or is a difference between a start time point of sending data by the UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and the UE adjusts, according to the first timing offset, the start time point of receiving data by the UE or the start time point of sending data by the UE, so as to synchronize with the DM-UE and the network-side device. By means of this solution, after the DM-UE is synchronized with the network-side device, because the UE can get synchronized with the network-side device by synchronizing with the DM-UE, synchronization without network coverage can be supported between the UE and the network-side device.

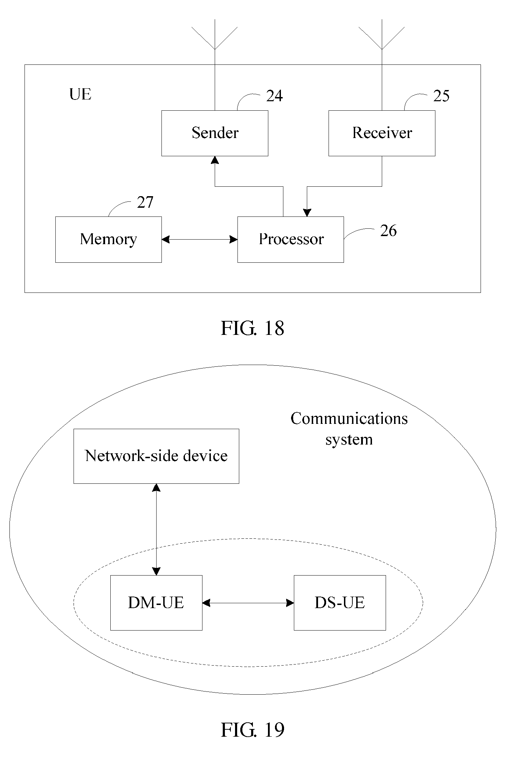

As shown in FIG. 18, an embodiment of the present invention provides a UE, including a sender 24, a receiver 25, a processor 26, and a memory 27.

The sender 24 may be configured to send an uplink signal to a network-side device, and specially, if the UE needs to communicate with the network-side device, the sender 24 may send uplink communication data to the network-side device.

The receiver 25 may be configured to receive a downlink signal from the network-side device, and specially, if the UE needs to communicate with the network-side device, the receiver 25 may receive downlink communication data from the network-side device.

The processor 26 is a control and processing center of the UE, and, by running a software program stored in the memory 27 and invoking and processing the data stored in the memory 27, controls the UE to receive and send a signal and implement other functions of the UE.

The memory 27 may be configured to store a software program and data, so that the processor 26 may implement signal receiving and sending and other functions of the UE by running the software program stored in the memory 27.

Specifically, the sender 24 may be configured to send a first synchronization signal to a DS-UE when communication is performed between the DS-UE and the UE in a D2D manner, where the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is a start time point of sending data after the UE is synchronized with a network-side device; the processor 26 is configured to keep synchronization with the DS-UE, where the synchronization is specifically that the DS-UE adjusts, according to the first timing offset, the start time point of receiving data by the DS-UE, so as to synchronize with the UE and the network-side device; and the memory 27 may be configured to store software code of the first synchronization signal and control the UE to execute the software program in the foregoing step, and therefore, by executing the software program, the processor 26 may invoke the software code to complete the foregoing step.

Optionally, the sender 24 is specifically configured to send the first synchronization signal to the DS-UE on a preset uplink time-frequency resource.

Optionally, the sender 24 is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period; the receiver 25 is configured to receive a first response message that is from the DS-UE and corresponding to the first instruction message sent by the sender 24; and the sender 24 is further configured to send the first response message, which is received by the receiver 25, to the network-side device, so that the network-side device learns, according to the first response message, success in changing the idle DRX period.

The UE provided in the embodiment of the present invention may send a first synchronization signal to a DS-UE when communication is performed between the DS-UE and the UE in a D2D manner, where the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is the start time point of sending data after the UE is synchronized with a network-side device; and the UE keeps synchronization with the DS-UE, where the synchronization is specifically that the DS-UE adjusts, according to the first timing offset, the start time point of receiving data by the DS-UE, so as to synchronize with the UE and the network-side device. By means of this solution, after the UE is synchronized with the network-side device, because the DS-UE can get synchronized with the network-side device by synchronizing with the UE, synchronization without network coverage can be supported between the DS-UE and the network-side device.

As shown in FIG. 18, an embodiment of the present invention provides a UE, including a sender 24, a receiver 25, a processor 26, and a memory 27.

Specifically, the receiver 25 may be configured to receive a synchronization signal from a DS-UE when communication is performed between the DS-UE and the UE in a D2D manner; the processor 26 may be configured to acquire a first timing offset according to the synchronization signal received by the receiver 25 from the DS-UE, where the first timing offset is a difference between a start time point of sending data by the DS-UE and a start time point of receiving data by the UE, and the start time point of receiving data by the UE is a start time point of receiving data after the UE is synchronized with a network-side device; the sender 24 may be configured to send the first timing offset, which is acquired by the processor 26, to the DS-UE, where the first timing offset is used by the DS-UE to adjust, according to the first timing offset, the start time point of sending data by the DS-UE, so as to synchronize with the UE and the network-side device; and the memory 27 may be configured to store software code of the second synchronization signal and the first timing offset, and control the UE to execute the software program in the foregoing step, and therefore, by executing the software program, the processor 26 may invoke the software code to complete the foregoing step.

Optionally, the processor 26 is specifically configured to perform calculation on the synchronization signal received by the receiver 25 from the DS-UE, so as to obtain a second synchronization peak; and determine the first timing offset according to a time point corresponding to the second synchronization peak.

Optionally, the sender 24 is specifically configured to send the first timing offset, which is acquired by the processor 26, to the DS-UE on a preset uplink time-frequency resource.

Optionally, the sender 24 is further configured to send a first instruction message to the DS-UE after the UE is synchronized with the network-side device and the DS-UE, so that the DS-UE changes an idle DRX period according to the first instruction message, where the first instruction message is sent by the network-side device to the UE, the first instruction message is used to instruct that the idle DRX period be changed, and the first instruction message includes a message type and a period value of the idle DRX period; the receiver 25 is further configured to receive a first response message that is from the DS-UE and corresponding to the first instruction message sent by the sender 24; and the sender 24 is further configured to send the first response message, which is received by the receiver 25, to the network-side device, so that the network-side device learns, according to the first response message, success in changing the idle DRX period.

The UE provided in the embodiment of the present invention receives a synchronization signal from a DS-UE when communication is performed between the DS-UE and the UE in a D2D manner, and the UE acquires a first timing offset according to the synchronization signal received by the UE from the DS-UE, where the first timing offset is a difference between a start time point of sending data by the DS-UE and a start time point of receiving data by the UE, and the start time point of receiving data by the UE is the start time point of receiving data after the UE is synchronized with a network-side device; and the UE sends the first timing offset to the DS-UE, where the first timing offset is used by the DS-UE to adjust, according to the first timing offset, the start time point of sending data by the DS-UE, so as to synchronize with the UE and the network-side device. By means of this solution, after the UE is synchronized with the network-side device, because the DS-UE can get synchronized with the network-side device by synchronizing with the UE, synchronization without network coverage can be supported between the DS-UE and the network-side device.

As shown in FIG. 19, an embodiment of the present invention provides a communications system, including a network-side device, a UE used as a DM-UE, and a UE used as a DS-UE.

According to the communications system provided in the embodiment of the present invention, a DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and the DS-UE adjusts, according to the first timing offset, the start time point of receiving data by the DS-UE or the start time point of sending data by the DS-UE, so as to synchronize with the DM-UE and the network-side device. By means of this solution, after the DM-UE is synchronized with the network-side device, because the DS-UE can get synchronized with the network-side device by synchronizing with the DM-UE, synchronization without network

EP 3 046 279 A1

coverage can be supported between the DS-UE and the network-side device.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A synchronization method, comprising:

    acquiring, by a device-to-device slave user terminal DS-UE, a first timing offset, wherein the first timing offset is a difference between a start time point of receiving data by the DS-UE and a start time point of sending data by a device-to-device master user terminal DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and
    adjusting, by the DS-UE according to the first timing offset, the start time point of receiving data by the DS-UE or the start time point of sending data by the DS-UE, so as to synchronize with the DM-UE and the network-side device.

2. The synchronization method according to claim 1, wherein the acquiring, by a device-to-device slave user terminal DS-UE, a first timing offset comprises:

    receiving, by the DS-UE, a first synchronization signal from the DM-UE when communication is performed between the DS-UE and the DM-UE in a device-to-device D2D manner, wherein the first synchronization signal is used to synchronize the start time point of receiving data by the DS-UE with the start time point of sending data by the DM-UE; and

acquiring, by the DS-UE, the first timing offset according to the first synchronization signal.

3. The synchronization method according to claim 1, wherein before the acquiring, by a device-to-device slave user terminal DS-UE, a first timing offset, the method further comprises:

sending, by the DS-UE, a second synchronization signal to the DM-UE when communication is performed between the DS-UE and the DM-UE in a D2D manner, so that the DM-UE acquires the first timing offset according to the second synchronization signal and sends the first timing offset to the DS-UE, wherein the second synchronization signal is used to synchronize the start time point of sending data by the DS-UE with the start time point of receiving data by the DM-UE.

4. The synchronization method according to claim 2, wherein a method used by the DS-UE to acquire the first timing offset according to the first synchronization signal comprises:

performing, by the DS-UE, calculation on the first synchronization signal to obtain a first synchronization peak; and

determining, by the DS-UE, the first timing offset according to a time point corresponding to the first synchronization peak.

5. The synchronization method according to claim 2 or 4, wherein the receiving, by the DS-UE, a first synchronization signal from the DM-UE comprises:

receiving, by the DS-UE, the first synchronization signal from the DM-UE on a preset uplink time-frequency resource.

6. The synchronization method according to claim 3, wherein the acquiring, by a device-to-device slave user terminal DS-UE, a first timing offset comprises:

receiving, by the DS-UE, the first timing offset from the DM-UE on a preset uplink time-frequency resource.

7. The synchronization method according to claim 1, wherein after the synchronizing, by the DS-UE, with the network-side device and the DM-UE, the method further comprises:

receiving, by the DS-UE, a first instruction message from the DM-UE, wherein the first instruction message is sent by the network-side device to the DM-UE, the first instruction message is used to instruct that an idle discontinuous reception idle DRX period be changed, and the first instruction message comprises a message type and a period value of the idle DRX period;

changing, by the DS-UE, the idle DRX period according to the first instruction message; and

sending, by the DS-UE, a first response message corresponding to the first instruction message to the DM-UE, so that the DM-UE sends the first response message to the network-side device, and the network-side device learns, according to the first response message, success in changing the idle DRX period.

8. The synchronization method according to claim 7, wherein after the changing, by the DS-UE, the idle DRX period according to the first instruction message, the method further comprises:

communicating, by the DS-UE, with the DM-UE according to a changed idle DRX period.

9. A synchronization method, comprising:

sending, by a DM-UE, a first synchronization signal to a DS-UE when communication is performed between the DS-UE and the DM-UE in a D2D manner, wherein the first synchronization signal is used by the DS-UE to acquire a first timing offset according to the first synchronization signal, the first timing offset is a difference between a start time point of receiving data by the DS-UE and a start time point of sending data by the DM-UE, and the start time point of sending data by the DM-UE is a start time point of sending data after the DM-UE is synchronized with a network-side device; and

keeping, by the DM-UE, synchronization with the DS-UE, wherein the synchronization is specifically that the DS-UE adjusts, according to the first timing offset, the start time point of receiving data by the DS-UE, so as to synchronize with the DM-UE and the network-side device.

10. The synchronization method according to claim 9, wherein the sending, by a DM-UE, a first synchronization signal to a DS-UE comprises:

sending, by the DM-UE, the first synchronization signal to the DS-UE on a preset uplink time-frequency resource.

11. The synchronization method according to claim 9 or 10, wherein after the synchronizing, by the DM-UE, with the network-side device and the DS-UE, the method further comprises:

sending, by the DM-UE, a first instruction message to the DS-UE, so that the DS-UE changes an idle DRX period according to the first instruction message, wherein the first instruction message is sent by the network-side device to the DM-UE, the first instruction message is used to instruct that the idle DRX period be changed, and the first instruction message comprises a message type and a period value of the idle DRX period;
receiving, by the DM-UE, a first response message that is from the DS-UE and corresponding to the first instruction message; and
sending, by the DM-UE, the first response message to the network-side device, so that the network-side device learns, according to the first response message, success in changing the idle DRX period.

12. A synchronization method, comprising:

receiving, by a DM-UE, a synchronization signal from a DS-UE when communication is performed between the DS-UE and the DM-UE in a D2D manner;
acquiring, by the DM-UE, a first timing offset according to the synchronization signal received from the DS-UE, wherein the first timing offset is a difference between a start time point of sending data by the DS-UE and a start time point of receiving data by the DM-UE, and the start time point of receiving data by the DM-UE is a start time point of receiving data after the DM-UE is synchronized with a network-side device; and
sending, by the DM-UE, the first timing offset to the DS-UE, wherein the first timing offset is used by the DS-UE to adjust, according to the first timing offset, the start time point of sending data by the DS-UE, so as to synchronize with the DM-UE and the network-side device.

13. The synchronization method according to claim 12, wherein a method used by the DM-UE to acquire the first timing offset according to the synchronization signal received from the DS-UE comprises:

performing, by the DM-UE, calculation on the synchronization signal received from the DS-UE, so as to obtain a second synchronization peak; and
determining, by the DM-UE, the first timing offset according to a time point corresponding to the second synchronization peak.

14. The synchronization method according to claim 12 or 13, wherein the sending, by the DM-UE, the first timing offset to the DS-UE comprises:

sending, by the DM-UE, the first timing offset to the DS-UE on a preset uplink time-frequency resource.

15. The synchronization method according to any one of claims 12 to 14, wherein after the synchronizing, by the DM-UE, with the network-side device and the DS-UE, the method further comprises:

sending, by the DM-UE, a first instruction message to the DS-UE, so that the DS-UE changes an idle DRX period according to the first instruction message, wherein the first instruction message is sent by the network-side device to the DM-UE, the first instruction message is used to instruct that the idle DRX period be changed, and the first instruction message comprises a message type and a period value of the idle DRX period;
receiving, by the DM-UE, a first response message that is from the DS-UE and corresponding to the first instruction message; and
sending, by the DM-UE, the first response message to the network-side device, so that the network-side device learns, according to the first response message, success in changing the idle DRX period.

16. A UE, comprising:

an acquiring unit, configured to acquire a first timing offset, wherein the first timing offset is a difference between a start time point of receiving data by the UE and a start time point of sending data by a DM-UE, or is a difference between a start time point of sending data by the UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device; and

a processing unit, configured to: according to the first timing offset acquired by the acquiring unit, adjust the start time point of receiving data by the UE or the start time point of sending data by the UE, so as to synchronize with the DM-UE and the network-side device.

17. The UE according to claim 16, wherein the UE further comprises a receiving unit;

the receiving unit is configured to receive a first synchronization signal from the DM-UE when communication is performed between the UE and the DM-UE in a D2D manner, wherein the first synchronization signal is used to synchronize the start time point of receiving data by the UE with the start time point of sending data by the DM-UE; and

the acquiring unit is specifically configured to acquire the first timing offset according to the first synchronization signal received by the receiving unit, wherein the first synchronization signal is used to synchronize the start time point of receiving data by the UE with the start time point of sending data by the DM-UE.

18. The UE according to claim 16, wherein the UE further comprises a sending unit, and

the sending unit is configured to, before the acquiring unit acquires the first timing offset, send a synchronization signal to the DM-UE when communication is performed between the UE and the DM-UE in a D2D manner, so that the DM-UE acquires the first timing offset according to the second synchronization signal and sends the first timing offset to the UE, wherein the second synchronization signal is used to synchronize the start time point of sending data by the UE with the start time point of receiving data by the DM-UE.

19. The UE according to claim 17, wherein

the acquiring unit is specifically configured to perform calculation on the first synchronization signal received by the receiving unit, so as to obtain a first synchronization peak; and determine the first timing offset according to a time point corresponding to the first synchronization peak.

20. The UE according to claim 17 or 19, wherein

the receiving unit is specifically configured to receive the first synchronization signal from the DM-UE on a preset uplink time-frequency resource.

21. The UE according to claim 18, wherein

the acquiring unit is specifically configured to receive the first timing offset from the DM-UE on a preset uplink time-frequency resource.

22. The UE according to claim 16, wherein the UE further comprises a sending unit and a receiving unit;

the receiving unit is configured to receive a first instruction message from the DM-UE after the UE is synchronized with the network-side device and the DM-UE, wherein the first instruction message is sent by the network-side device to the DM-UE, the first instruction message is used to instruct that an idle DRX period be changed, and the first instruction message comprises a message type and a period value of the idle DRX period;

the processing unit is further configured to change the idle DRX period according to the first instruction message received by the receiving unit; and

the sending unit is configured to send a first response message, which is corresponding to the first instruction message received by the receiving unit, to the DM-UE, so that the DM-UE sends the first response message to the network-side device, and the network-side device learns, according to the first response message, success in changing the idle DRX period.

23. The UE according to claim 22, wherein

the processing unit is further configured to communicate with the DM-UE according to a changed idle DRX period.

24. A UE, comprising:

a sending unit, configured to send a first synchronization signal to a DS-UE when communication is performed between the DS-UE and the UE in a D2D manner, wherein the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is a start time point of sending data after the UE is synchronized with a network-side device; and

a keeping unit, configured to keep synchronization with the DS-UE, wherein the synchronization is specifically that the DS-UE adjusts, according to the first timing offset, the start time point of receiving data by the DS-UE, so as to synchronize with the UE and the network-side device.

25. The UE according to claim 24, wherein

the sending unit is specifically configured to send the first synchronization signal to the DS-UE on a preset uplink time-frequency resource.

26. The UE according to claim 24 or 25, wherein the UE further comprises a receiving unit;

the sending unit is further configured to send a first instruction message to the DS-UE after the UE is synchronized with the network-side device and the DS-UE, so that the DS-UE changes an idle DRX period according to the first instruction message, wherein the first instruction message is sent by the network-side device to the UE, the first instruction message is used to instruct that the idle DRX period be changed, and the first instruction message comprises a message type and a period value of the idle DRX period;

the receiving unit is configured to receive a first response message that is from the DS-UE and corresponding to the first instruction message sent by the sending unit; and

the sending unit is further configured to send the first response message, which is received by the receiving unit, to the network-side device, so that the network-side device learns, according to the first response message, success in changing the idle DRX period.

27. A UE, comprising:

a receiving unit, configured to receive a synchronization signal from a DS-UE when communication is performed between the DS-UE and the UE in a D2D manner;

an acquiring unit, configured to acquire a first timing offset according to the synchronization signal received by the receiving unit from the DS-UE, wherein the first timing offset is a difference between a start time point of sending data by the DS-UE and a start time point of receiving data by the UE, and the start time point of receiving data by the UE is a start time point of receiving data after the UE is synchronized with a network-side device; and

a sending unit, configured to send the first timing offset, which is acquired by the acquiring unit, to the DS-UE, wherein the first timing offset is used by the DS-UE to adjust, according to the first timing offset, the start time point of sending data by the DS-UE, so as to synchronize with the UE and the network-side device.

28. The UE according to claim 27, wherein

the acquiring unit is specifically configured to perform calculation on the synchronization signal received by the receiving unit from the DS-UE, so as to obtain a second synchronization peak; and determine the first timing offset according to a time point corresponding to the second synchronization peak.

29. The UE according to claim 27 or 28, wherein

the sending unit is specifically configured to send the first timing offset, which is acquired by the acquiring unit, to the DS-UE on a preset uplink time-frequency resource.

30. The UE according to any one of claims 27 to 29, wherein

the sending unit is further configured to send a first instruction message to the DS-UE after the UE is synchronized with the network-side device and the DS-UE, so that the DS-UE changes an idle DRX period according to the first instruction message, wherein the first instruction message is sent by the network-side device to the UE, the first instruction message is used to instruct that the idle DRX period be changed, and the first instruction message comprises a message type and a period value of the idle DRX period;

the receiving unit is further configured to receive a first response message that is from the DS-UE and corresponding to the first instruction message sent by the sending unit; and

the sending unit is further configured to send the first response message, which is received by the receiving unit, to the network-side device, so that the network-side device learns, according to the first response message, success in changing the idle DRX period.

31. A UE, comprising:

a processor, configured to acquire a first timing offset, and adjust, according to the first timing offset, a start time point of receiving data by the UE or a start time point of sending data by the UE, so as to synchronize with a DM-UE and a network-side device, wherein the first timing offset is a difference between a start time point of receiving data by the UE and a start time point of sending data by the DM-UE, or is a difference between a start time point of sending data by the UE and a start time point of receiving data by the DM-UE, the start time point of sending data by the DM-UE is a start time point of sending data after the DM-UE is synchronized with the network-side device, and the start time point of receiving data by the DM-UE is a start time point of receiving data after the DM-UE is synchronized with the network-side device.

32. The UE according to claim 31, wherein the UE further comprises a receiver; the receiver is configured to receive a first synchronization signal from the DM-UE when communication is performed between the UE and the DM-UE in a D2D manner, wherein the first synchronization signal is used to synchronize the start time point of receiving data by the UE with the start time point of sending data by the DM-UE; and
the processor is specifically configured to acquire the first timing offset according to the first synchronization signal received by the receiver.

33. The UE according to claim 31, wherein the UE further comprises a sender, and
the sender is configured to, before the processor acquires the first timing offset, send a second synchronization signal to the DM-UE when communication is performed between the UE and the DM-UE in a D2D manner, so that the DM-UE acquires the first timing offset according to the second synchronization signal and sends the first timing offset to the UE, wherein the second synchronization signal is used to synchronize the start time point of sending data by the UE with the start time point of receiving data by the DM-UE.

34. The UE according to claim 32, wherein
the processor is specifically configured to perform calculation on the first synchronization signal received by the receiver, so as to obtain a first synchronization peak; and determine the first timing offset according to a time point corresponding to the first synchronization peak.

35. The UE according to claim 32 or 34, wherein
the receiver is specifically configured to receive the first synchronization signal from the DM-UE on a preset uplink time-frequency resource.

36. The UE according to claim 33, wherein the UE further comprises a receiver, and
the receiver is configured to receive the first timing offset from the DM-UE on a preset uplink time-frequency resource.

37. The UE according to claim 31, wherein the UE further comprises a sender and a receiver;
the receiver is configured to receive a first instruction message from the DM-UE after the UE is synchronized with the network-side device and the DM-UE, wherein the first instruction message is sent by the network-side device to the DM-UE, the first instruction message is used to instruct that an idle DRX period be changed, and the first instruction message comprises a message type and a period value of the idle DRX period;
the processor is further configured to change the idle DRX period according to the first instruction message received by the receiver; and
the sender is configured to send a first response message, which is corresponding to the first instruction message received by the receiver, to the DM-UE, so that the DM-UE sends the first response message to the network-side device, and the network-side device learns, according to the first response message, success in changing the idle DRX period.

38. The UE according to claim 37, wherein
the processor is further configured to communicate with the DM-UE according to a changed idle DRX period.

39. A UE, comprising:

a sender, configured to send a first synchronization signal to a DS-UE when communication is performed between the DS-UE and the UE in a D2D manner, wherein the first synchronization signal is used by the DS-UE to acquire a first timing offset according to the first synchronization signal, the first timing offset is a difference between a start time point of receiving data by the DS-UE and a start time point of sending data by the UE, and the start time point of sending data by the UE is a start time point of sending data after the UE is synchronized with a network-side device; and

a processor, configured to keep synchronization with the DS-UE, wherein the synchronization is specifically that the DS-UE adjusts, according to the first timing offset, the start time point of receiving data by the DS-UE, so as to synchronize with the UE and the network-side device.

**40.** The UE according to claim 39, wherein
the sender is specifically configured to send the first synchronization signal to the DS-UE on a preset uplink time-frequency resource.

**41.** The UE according to claim 39 or 40, wherein the UE further comprises a receiver;
the sender is further configured to send a first instruction message to the DS-UE after the UE is synchronized with the network-side device and the DS-UE, so that the DS-UE changes an idle DRX period according to the first instruction message, wherein the first instruction message is sent by the network-side device to the UE, the first instruction message is used to instruct that the idle DRX period be changed, and the first instruction message comprises a message type and a period value of the idle DRX period;
the receiver is configured to receive a first response message that is from the DS-UE and corresponding to the first instruction message sent by the sender; and
the sender is further configured to send the first response message, which is received by the receiver, to the network-side device, so that the network-side device learns, according to the first response message, success in changing the idle DRX period.

**42.** A UE, comprising:

a receiver, configured to receive a synchronization signal from a DS-UE when communication is performed between the DS-UE and the UE in a D2D manner;
a processor, configured to acquire a first timing offset according to the synchronization signal received by the receiver from the DS-UE, wherein the first timing offset is a difference between a start time point of sending data by the DS-UE and a start time point of receiving data by the UE, and the start time point of receiving data by the UE is a start time point of receiving data after the UE is synchronized with a network-side device; and
a sender, configured to send the first timing offset, which is acquired by the processor, to the DS-UE, wherein the first timing offset is used by the DS-UE to adjust, according to the first timing offset, the start time point of sending data by the DS-UE, so as to synchronize with the UE and the network-side device.

**43.** The UE according to claim 42, wherein
the processor is specifically configured to perform calculation on the synchronization signal received by the receiver from the DS-UE, so as to obtain a second synchronization peak; and determine the first timing offset according to a time point corresponding to the second synchronization peak.

**44.** The UE according to claim 42 or 43, wherein
the sender is specifically configured to send the first timing offset, which is acquired by the processor, to the DS-UE on a preset uplink time-frequency resource.

**45.** The UE according to any one of claims 42 to 44, wherein
the sender is further configured to send a first instruction message to the DS-UE after the UE is synchronized with the network-side device and the DS-UE, so that the DS-UE changes an idle DRX period according to the first instruction message, wherein the first instruction message is sent by the network-side device to the UE, the first instruction message is used to instruct that the idle DRX period be changed, and the first instruction message comprises a message type and a period value of the idle DRX period;
the receiver is further configured to receive a first response message that is from the DS-UE and corresponding to the first instruction message sent by the sender; and
the sender is further configured to send the first response message, which is received by the receiver, to the network-side device, so that the network-side device learns, according to the first response message, success in changing the idle DRX period.

A DS-UE acquires a first timing offset, where the first timing offset is a difference between a start time point of receiving data by the DS-UE and a start time point of sending data by a DM-UE, or is a difference between a start time point of sending data by the DS-UE and a start time point of receiving data by a DM-UE, the start time point of sending data by the DM-UE is a start time point of sending data after the DM-UE is synchronized with a network-side device, and the start time point of receiving data by the DM-UE is a start time point of receiving data after the DM-UE is synchronized with the network-side device

S101

According to the first timing offset, the DS-UE adjusts the start time point of receiving data by the DS-UE or the start time point of sending data by the DS-UE, so as to synchronize with the DM-UE and the network-side device

S102

FIG. 1

A DM-UE sends a first synchronization signal to a DS-UE when communication is performed between the DS-UE and the DM-UE in a D2D manner, where the first synchronization signal is used by the DS-UE to acquire a first timing offset according to the first synchronization signal, the first timing offset is a difference between a start time point of receiving data by the DS-UE and a start time point of sending data by the DM-UE, and the start time point of sending data by the DM-UE is a start time point of sending data after the DM-UE is synchronized with a network-side device

S201

The DM-UE keeps synchronization with the DS-UE, where the synchronization is specifically that the DS-UE adjusts, according to the first timing offset, the start time point of receiving data by the DS-UE, so as to synchronize with the DM-UE and the network-side device

S202

FIG. 2

A DM-UE receives a synchronization signal from a DS-UE when communication is performed between the DS-UE and the DM-UE in a D2D manner — S301

The DM-UE acquires a first timing offset according to the synchronization signal received by the DM-UE from the DS-UE, where the first timing offset is a difference between a start time point of sending data by the DS-UE and a start time point of receiving data by the DM-UE, and the start time point of receiving data by the DM-UE is a start time point of receiving data after the DM-UE is synchronized with a network-side device — S302

The DM-UE sends the first timing offset to the DS-UE, where the first timing offset is used by the DS-UE to adjust, according to the first timing offset, the start time point of sending data by the DS-UE, so as to synchronize with the DM-UE and the network-side device — S303

FIG. 3

DS-UE                               DM-UE                    Network-
                                                            side device

S401. A network-side
device sends, to a DM-
UE, a synchronization
signal used to
synchronize a start time
point of sending data by
the network-side device
with a start time point of
receiving data by the
DM-UE

S402. The DM-UE acquires a timing offset between the network-side
device and the DM-UE according to the synchronization signal used to
synchronize the start time point of sending data by the network-side device
with the start time point of receiving data by the DM-UE, and adjusts,
according to the timing offset between the network-side device and the
DM-UE, the start time point of receiving data by the DM-UE, so as to
complete downlink synchronization with the network-side device

S403. A DS-UE receives a first
synchronization signal from the DM-UE when
communication is performed between the DS-
UE and the DM-UE in a D2D manner, and
acquires a first timing offset according to the
first synchronization signal, where the first
synchronization signal is a synchronization
signal received for the first time after the DS-
UE starts up, and the first synchronization
signal is used to synchronize the start time
point of receiving data by the DS-UE with the
start time point of sending data by the DM-UE

S404. According to the first timing offset,
the DS-UE adjusts the start time point of
receiving data by the DS-UE, so as to
synchronize with the DM-UE and the
network-side device

FIG. 4

Start-up time
point of a DS-UE

delta1

FIG. 5

FIG. 6

Start-up time point of the DS-UE

A clock crystal oscillator error causes the start-up time point of the DS-UE to be earlier than time of a network-side device

10 milliseconds

DM-UE

Paging

Paging

DS-UE

Start-up time point of the DM-UE

Start-up time point of the DS-UE

A clock crystal oscillator error causes the start-up time point of the DS-UE to be later than time of a network-side device

10 milliseconds

DM-UE

Paging

Paging

DS-UE

First synchronization signal

Time required for synchronization between the DM-UE and the network-side device

DS-UE                    DM-UE                    Network-
                                                  side device

S401. A network-side
device sends to a DM-
UE a synchronization
signal used to
synchronize a start
time point of sending
data by the network-
side device with a start
time point of receiving
data by the DM-UE

S402. The DM-UE acquires a timing offset between the
network-side device and the DM-UE according to the
synchronization signal used to synchronize the start time
point of sending data by the network-side device with the
start time point of receiving data by the DM-UE, and
adjusts, according to the timing offset between the network-
side device and the DM-UE, the start time point of
receiving data by the DM-UE, so as to complete downlink
synchronization with the network-side device

S403. A DS-UE sends a second
synchronization signal to the DM-UE
when communication is performed
between the DS-UE and the DM-UE in a
D2D manner, so that the DM-UE acquires
a first timing offset according to the
second synchronization signal; and the
DS-UE receives the first timing offset
from the DM-UE, where the second
synchronization signal is used to
synchronize the start time point of sending
data by the DS-UE with the start time
point of receiving data by the DM-UE

S404. According to the first timing offset, the
DS-UE adjusts the start time point of sending
data by the DS-UE, so as to synchronize with
the DM-UE and the network-side device

FIG. 7

Start-up time
point of a DM-UE

A crystal oscillator error
causes a start-up time point
of a DS-UE to be later

delta

FIG. 8

DS-UE                               DM-UE                    Network-
                                                             side device

S501. A network-side
device sends a first
instruction message to a
DM-UE, where the first
instruction message is
used to instruct that an
idle DRX period be
changed

S502. The DM-UE changes an idle DRX
period of the DM-UE according to the first
instruction message

S503. The DM-UE communicates with the
network-side device and a DS-UE according
to a changed idle DRX period of the DM-UE

S504. The DM-UE sends the first
instruction message to a DS-UE

S505. The DS-UE changes an idle
DRX period of the DS-UE according
to the first instruction message

S506. The DS-UE communicates
with the network-side device and the
DM-UE according to a changed idle
DRX period of the DS-UE

S507. The DS-UE sends a first
response message corresponding
to the first instruction message
to the DM-UE

S508. The DM-UE
sends the first response
message to the
network-side device

S509. According to the first
response message, the network-
side device learns success in
changing the idle DRX period

FIG. 9

UE 1

Acquiring unit 10

Processing unit 11

FIG. 10

UE 1

Receiving unit 12

Acquiring unit 10

Processing unit 11

FIG. 11

UE 1

Sending unit 13

Acquiring unit 10

Processing unit 11

FIG. 12

UE    1

Acquiring unit    10

Processing unit    11

Receiving unit    12

Sending unit    13

**FIG. 13**

UE    2

Sending unit    20

Keeping unit    21

**FIG. 14**

UE    2

Sending unit    20

Receiving unit    22

Keeping unit    21

**FIG. 15**

UE

Receiving unit — 22

Acquiring unit — 23

Sending unit — 20

2

FIG. 16

UE

Sender — 14

Receiver — 15

Memory — 17

Processor — 16

FIG. 17

FIG. 18

FIG. 19

# INTERNATIONAL SEARCH REPORT

International application No.

PCT/CN2013/084722

## A. CLASSIFICATION OF SUBJECT MATTER

H04J 3/06 (2006.01) i; H04W 56/00 (2009.01) i

According to International Patent Classification (IPC) or to both national classification and IPC

## B. FIELDS SEARCHED

Minimum documentation searched (classification system followed by classification symbols)

H04J; H04W; H04Q

Documentation searched other than minimum documentation to the extent that such documents are included in the fields searched

Electronic data base consulted during the international search (name of data base and, where practicable, search terms used)

CNPAT; WPI; EPODOC; CNKI; IEEE: d2d, send, receive, device to device, master, slave, network, time, synchronization, deviation

## C. DOCUMENTS CONSIDERED TO BE RELEVANT

| Category* | Citation of document, with indication, where appropriate, of the relevant passages | Relevant to claim No. |
|---|---|---|
| X | CN 102468898 A (ZTE CORP.) 23 May 2012 (23.05.2012) description, paragraphs [0025]-[0037] and [0080]-[0087] | 1-45 |
| X | CN 101765199 A (CHINA MOBILE COMMUNICATIONS CORPORATION) 30 June 2010 (30.06.2010) description, paragraphs [0038]-[0050] | 1-45 |
| A | CN 101515831 A (HANGZHOU H3C TECHNOLOGIES CO LTD) 26 August 2009 (26.08.2009) the whole document | 1-45 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 June 2014 | 01 July 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer GONG, Lei Telephone No. (86-10) 62413375 |
|---|---|

Form PCT/ISA /210 (second sheet) (July 2009)

**INTERNATIONAL SEARCH REPORT**
Information on patent family members

| | International application No. |
|---|---|
| | PCT/CN2013/084722 |

| Patent Documents referred in the Report | Publication Date | Patent Family | Publication Date |
|---|---|---|---|
| CN 102468898 A | 23 May 2012 | WO 2012065334 A1 | 24 May 2012 |
| CN 101765199 A | 30 June 2010 | None | |
| CN 101515831 A | 26 August 2009 | None | |

Form PCT/ISA /210 (patent family annex) (July 2009)